# EUROPEAN PATENT APPLICATION

(11) **EP 4 793 199 A1**
(43) Date of publication of application: **19.08.2026**
(21) Application number: 24881822.1
(22) Date of filing: 24.12.2024
(51) Int. Cl.: B65D 90/00

(54) **ENERGY STORAGE DEVICE, ENERGY STORAGE SYSTEM AND CHARGING NETWORK**

(30) Priority: 24.10.2023 CN 202322858858 U; 08.04.2024 WO PCT/CN2024/086600; 08.04.2024 WO PCT/CN2024/086624; 09.07.2024 WO PCT/CN2024/104413; 09.07.2024 WO PCT/CN2024/104575; 19.07.2024 WO PCT/CN2024/106588; 12.08.2024 WO PCT/CN2024/111558; 15.08.2024 CN 202421984591 U; 15.08.2024 WO PCT/CN2024/112387; 15.08.2024 WO PCT/CN2024/112473; 15.08.2024 WO PCT/CN2024/112498; 15.08.2024 WO PCT/CN2024/112558; 24.10.2024 WO PCT/CN2024/127187
(71) Applicant: Contemporary Amperex Technology Co., Limited, Ningde, Fujian 352100 (CN)
(72) Inventor: ZHANG, Mingliang, Ningde, Fujian 352100 (CN); PENG, Haoran, Ningde, Fujian 352100 (CN); SU, Haibin, Ningde, Fujian 352100 (CN); LI, Zhonghong, Ningde, Fujian 352100 (CN)
(74) Representative: Lorenz Seidler Gossel Part. mbB
(86) International application number: PCT/CN2024/141959
(87) International publication number: WO 2025/087463

(57) **Abstract**

An energy storage device, an energy storage system and a charging network. The energy storage device (100) comprises at least one energy compartment (10) and at least one control compartment (20), wherein the energy compartment (10) comprises a first compartment body (13) and an energy unit (12), the energy unit (12) being accommodated in the first compartment body (13); the dimension of the energy compartment (10) in a height direction thereof is less than the dimension of a standard container in a height direction thereof; the control compartment (20) is disposed outside the energy compartment (10); and the control compartment (20) comprises a second compartment body (21) and a control module (22), the control module (22) being accommodated in the second compartment body (21), and the control module (22) being used for performing electrical control on the energy unit (12) in the energy compartment (10).

## Description

This application claims priority to Chinese Patent Application No. PCT/CN2024/112473 filed on August 15, 2024, Chinese Patent Application No. PCT/CN2024/112498 filed on August 15, 2024, Chinese Patent Application No. PCT/CN2024/111558 filed on August 12, 2024, Chinese Patent Application No. PCT/CN2024/112387 filed on August 15, 2024, Chinese Patent Application No. 202421984591.6 filed on August 15, 2024, Chinese Patent Application No. PCT/CN2024/112558 filed on August 15, 2024, Chinese Patent Application No. PCT/CN2024/106588 filed on July 19, 2024, Chinese Patent Application No. PCT/CN2024/104575 filed on July 09, 2024, Chinese Patent Application No. PCT/CN2024/086624 filed on April 08, 2024, Chinese Patent Application No. PCT/CN2024/104413 filed on July 09, 2024, Chinese Patent Application No. 202322858858.9 filed on October 24, 2023, Chinese Patent Application No. PCT/CN2024/086600 filed on April 08, 2024, Chinese Patent Application No. PCT/CN2024/127187 filed on October 24, 2024, which is incorporated by reference in its entirety.

### TECHNICAL FIELD

The present disclosure relates to the technical field of batteries, and particularly relates to an energy storage apparatus, an energy storage system, and a charging network.

### BACKGROUND

With the rapid development of technology, electric energy has become an indispensable energy source in people work and daily life. To ensure a smooth supply of electric energy to realize normal work and daily activities, energy storage apparatuses are needed. As apparatuses for cyclically storing and releasing the electric energy, the energy storage apparatuses can store the electric energy by charging or supply the stored electric energy to electrical apparatuses by discharging. The energy storage apparatuses are widely used in the fields of industrial power supply, household power supply, temporary power supply, mobile power supply, wind power generation, solar power generation, energy storage power stations, etc.

In the development of the energy storage apparatuses, besides improving their performance, how to reduce their use cost is also an issue that cannot be ignored. Therefore, how to reduce the use cost of the energy storage apparatuses is a technical problem that continues to be relieved in energy storage technology.

### SUMMARY OF THE INVENTION

In view of the above, the embodiments of the present disclosure are expected to provide an energy storage apparatus, an energy storage system, and a charging network, aiming to reduce the use cost of the energy storage apparatus.

To achieve above objective, in a first aspect, the embodiment of the present disclosure provides the energy storage apparatus, which includes:
at least one energy bin which includes a first bin body and an energy unit that is accommodated in the first bin body, a size of the energy bin in a height direction being less than a size of one standard container in the height direction; and
at least one control bin which is arranged outside the energy bin and includes a second bin body and a control module, the control module being accommodated in the second bin body and configured to perform electrical control on the energy unit in the energy bin.

According to the energy storage apparatus provided by the embodiment of the present disclosure, sizes of the energy bins in a height direction are set to be less than that of one standard container in the height direction, and by reducing the sizes of the energy bins, the manufacturing cost of the energy storage apparatus can be reduced, moreover, the total weight of the energy bins is decreased, which is conducive to relieving the problem of overweight in transportation, and reducing the transportation cost of the energy storage apparatus, thereby reducing the use cost of the energy storage apparatus. In addition, the control bins are provided and are arranged outside the energy bins, that is, the control modules do not occupy the spaces of the first bin bodies, which means that the first bin bodies can be configured to accommodate more energy units, thereby improving the electric quantity and the energy density of the energy bins.

In some embodiments, the control bins and the energy bins are arranged separately.

In the embodiments, the control bins and the energy bins are arranged separately; the energy bins can be stacked for use on site, therefore, the area energy density is improved, and the energy bins only accommodate the energy units as much as possible; the control bins and the energy bins are arranged separately, which is conducive to reducing the door opening or operation of the energy bins, and reducing condensate water inside the energy bins; and the control bins and the energy bins are separated, thus an operator is safe during operating the control bins.

In some embodiments, the control bins are arranged at ends of the energy bins in the length direction.

Therefore, a plurality of energy bins can be arranged in the length direction of the energy storage apparatus, and each control bin is arranged between every two adjacent energy bins and located at the end of the corresponding energy bin in the length direction, thereby being conducive to realizing the control of the control bins on the plurality of energy bins.

In some embodiments, the control bins are arranged on the sides of the energy bins in the width direction.

Therefore, the plurality of energy bins can be arranged in the width direction of the energy storage apparatus, and each control bin is arranged between every two adjacent energy bins and located at the end of the corresponding energy bin in the width direction, thereby being conducive to realizing the control of the control bins on the plurality of energy bins.

In some embodiments, the control bins and the energy bins are arranged in the height direction of the energy storage apparatus.

The control bins are arranged on the tops of the energy bins, or the energy bins are arranged on the tops of the control bins.

In some embodiments, the plurality of energy bins are provided and are arranged in the height direction of the energy storage apparatus.

In some embodiments, the plurality of control bins are provided and are arranged in the height direction of the energy storage apparatus.

The plurality of control bins are arranged, which is conducive to realizing maintenance and replacement to the control bins and facilitating the control to the plurality of energy bins.

In some embodiments, at least some of the control bins include first connectors which are electrically connected to the control modules; each energy bin includes a second connector; the second connectors are electrically connected to the plurality of energy units; and the first connectors are matched with the second connectors.

In the embodiments, through cooperation of the first connectors and each second connector, the control bins and the energy bins can be connected rapidly, thus the control bins and the energy bins can be connected more conveniently, and the control modules and energy units can be connected more conveniently.

In some embodiments, the control bins correspond to the energy bins one to one; or, one control bin performs electrical control on the energy units in the plurality of energy bins.

One control bin performs electrical control on the energy units in one energy bin, or, one control bin correspondingly controls the plurality of energy bins.

In some embodiments, the control modules include general control modules, and the general control modules are electrically connected to the energy units in at least one first bin body.

The general control modules are electrically connected to the energy units in at least one first bin body, namely, the general control modules can be electrically connected to the energy units in one first bin body, i.e., one general control module can perform monitoring and management functions on the energy units in one first bin body; or the general control modules can be electrically connected to the energy units in a plurality of first bin bodies, i.e., one general control module can perform monitoring and management functions on the energy units in the plurality of first bin bodies.

In some embodiments, the control modules include main control modules which are electrically connected to the general control modules; and
one main control module is configured to control the input or output of electric energy of the energy units in one energy cabin, or, one main control module is configured to control the input or output of the electric energy of the energy units in the plurality of energy cabins.

One main control module is configured to control the input or output of the electric energy of the energy units in one energy cabin, thereby facilitating the connection between different main control modules and the energy units in different energy cabins.

One main control module is configured to control the input or output of the electric energy of the energy units in the plurality of energy cabins, thereby being conducive to saving the space and reducing the cost.

In some embodiments, the number of the energy cabins is greater than or equal to the number of the control cabins.

In the embodiments that the number of the energy cabins is greater than the number of the control cabins, each control cabin can perform electrical control on the energy units in the plurality of energy cabins, or some of the control cabins correspond to the energy cabins one by one, and each of the other control cabins can perform electrical control on the energy units in the plurality of energy cabins.

In the embodiments that the number of the energy cabins is equal to the number of the control cabins, each control cabin can perform electrical control on the energy units in the plurality of energy cabins.

In some embodiments, the control bins include thermal management modules, and the thermal management modules are configured to manage temperatures of the energy units in all energy bins and are accommodated in the control bins.

In the embodiments, the thermal management modules are arranged and can manage the temperatures of the energy units, thus reducing the risk of temperature runaway of the energy units.

In some embodiments, one thermal management module is configured to manage the temperature of the energy units in one energy bin, or, one thermal management module is configured to manage the temperatures of the energy units in the plurality of energy bins.

One thermal management module is configured to manage the temperature of the energy units in one energy bin, thereby facilitating the connection between different thermal management modules and the energy units in different energy bins, and being conducive to improving the heat exchange efficiency.

One thermal management module is configured to manage the temperatures of the energy units in the plurality of energy bins, thereby being conducive to saving the space and reducing the cost.

In some embodiments, at least some of the thermal management modules and at least some of the control modules are accommodated in the same control bin.

Therefore, the control bins not only can perform electrical control on the energy units in the energy bins, but also can manage the temperatures of the energy units, thereby being conducive to improving the integration degrees of the control bins.

In some embodiments, the thermal management modules and the control modules are accommodated in different control bins.

Therefore, the interference of the thermal management modules for the control modules can be further reduced.

In some embodiments, the energy storage apparatus includes a plurality of battery apparatuses, each battery apparatus including a thermal management part and the plurality of energy units; and the thermal management parts are configured to regulate the temperatures of the energy units;
at least some of the control bins include third connectors, each energy bin includes a fourth connector, the third connectors communicate with the thermal management modules, the fourth connectors communicate with the thermal management parts, and the third connectors are matched with the corresponding fourth connectors.

In the embodiments, the third connectors and the fourth connectors are matched to realize rapid communication between the thermal management parts and the thermal management modules, which facilitates the mounting of the thermal management modules.

In some embodiments, the height of each energy bin is h, 850mm ≤ h < 2896mm.

The total weight of the energy bins can be controlled to be not greater than 45 tons, and the volume and electric quantity of the energy bins can be improved as much as possible, thus further reducing the use cost of the energy storage apparatus.

In some embodiments, 1300mm ≤ h ≤ 2400mm.

The total weight of the energy bins can be controlled to be not greater than 45 tons, and the volume and electric quantity of the energy bins can be improved as much as possible, thus further reducing the use cost of the energy storage apparatus.

In some embodiments, the size of each bin body in the length direction is consistent with the size of the standard container in the length direction, and the size of each bin body in the width direction is consistent with the size of the standard container in the width direction.

In the embodiments, the sizes of the first bin bodies in the length direction are set to be consistent with the sizes of the standard containers in the length direction, and the sizes of the first bin bodies in the width direction are set to be consistent with the sizes of the standard containers in the width direction, which is conducive to facilitate compatibility with transportation tools and lifting appliances of existing standard containers, and reducing the transportation cost of the energy storage apparatus, thereby reducing the use cost of the energy storage apparatus.

In some embodiments, the energy units are battery cells, and the weight of a single energy unit is 5-60 kg.

The energy units have proper weight, so that a proper amount of energy units can be accommodated in the energy bins, and the energy density is moderate while the transportation requirements are met.

In some embodiments, the weight of the energy bins is M, and M is less than or equal to 45 tons.

In order to enable the single energy bin to meet the requirements of some countries for the transportation limit, the total weight of the energy bins is controlled to be not greater than 45 tons, the energy density of the energy bins is as high as possible, meanwhile, the energy per the unit area is increased, and thus the cost input of customers is reduced.

In some embodiments, the weight of the energy bins is M, the total weight of energy units in the energy bins is M1, (M1/M) × 100% ≥ 60%.

In this way, on one hand, the weight ratio of the energy units in the first bin bodies per unit volume can be increased, thus increasing the electric quantity of the energy storage apparatus per unit volume; on the other hand, during the transportation of the energy storage apparatus, more energy units which contribute to energy storage capacity and are high in production difficulty and cannot be produced at a destination are transported, while other structures can be produced at a place closer to the destination without transportation or with reduced transportation.

In some embodiments, (M1/M) × 100% ≥ 80%.

Therefore, the transportation cost of the assembled energy storage apparatus is further reduced.

In some embodiments, the weight of the energy bins is M; the plurality of battery apparatuses are arranged in the energy bins, each including the box and the plurality of energy units; the plurality of energy units are accommodated in the box; and the total weight of the battery apparatuses is M2, 70% ≤ (M2/M) × 100% ≤ 90%.

The energy density of the energy bins and the structural strength of the first bin bodies can be balanced, thus improving the practicability of the first bin bodies.

In some embodiments, volumes of the energy bins are V, the total volume of the energy units in the energy bins is V1, (V1/V) × 100% ≥ 30%.

On one hand, the volume proportion of the energy units in the first bin bodies per unit volume can be increased, thus increasing the electric quantity of the energy storage apparatus per unit volume; on the other hand, during the transportation of the energy storage apparatus, more energy units which contribute to energy storage and are high in production difficulty and cannot be produced at the destination are transported, while other functional elements such as control elements of the energy storage apparatus can be produced at the place closer to the destination without transportation or with reduced transportation; and after the first bin bodies are assembled into the energy storage apparatus, the transportation cost of the assembled energy storage apparatus is reduced.

In some embodiments, (V1/V) × 100% ≥ 50%.

The transportation cost of the assembled energy storage apparatus is further reduced.

In some embodiments, the volumes of the energy bins are V; the plurality of battery apparatuses are arranged in the energy bins, each including the box and the plurality of energy units; the plurality of energy units are accommodated in the box; and the total volume of the battery apparatuses is V2, 50% ≤ (V2/V) × 100% ≤ 80%.

In some embodiments, the energy of the energy bins is E, the sizes of the energy bins in the length direction are a, the sizes of the energy bins in the width direction are b, 250KW/*m*² ≤ E/(a × b) ≤ 700KW/*m*².

The energy density and mass setting of the energy bins are balanced, the practicability of the energy bins is improved, and transportation of the energy bins is facilitated.

In some embodiments, 450KW/*m*² ≤ E/(a × b) ≤ 600KW/*m*².

The energy density of the energy storage apparatus and the mass settings of the energy bins can be further improved, thus facilitating the transportation of the energy bins.

In some embodiments, the plurality of energy bins are provided, and every two adjacent energy bins are welded, clamped, locked or connected through a fixing member in the height direction.

Every two adjacent energy bins in the height direction can be are connected through the fixing members and can be limited by the fixing members, which is conducive to reducing the risk that every two adjacent energy bins move mutually after being stacked, thereby improving the structural stability of the energy storage apparatus.

In some embodiments, the plurality of control bins are provided, and every two adjacent control bins are welded, clamped, locked or connected through a fixing member in the height direction.

Every two adjacent control bins in the height direction can be are connected through the fixing members and can be limited by the fixing members, which is conducive to reducing the risk that every two adjacent control bins move mutually after being stacked, thereby improving the structural stability of the energy storage apparatus.

In some embodiments, the standard containers in the height direction are 20-chi standard containers, with the heights of 2,896 mm, 2,591 mm or 2,438 mm.

In some embodiments, a first bin door is arranged on at least one side of the energy bins in the width direction.

In the embodiments, the first bin door is arranged on at least one side of the energy bins in the width direction, maintenance can be carried out through the first bin door, thereby reducing land waste caused by reserving a maintenance channel more than 3 m between every two bin bodies of traditional bin bodies; and only a normal maintenance channel for paint repair is needed to be reserved between matts-shaped bin bodies, which improves the land investment returns of users and increases the energy yield per unit area for the users.

In some embodiments, a second bin door is arranged on at least one side of the control bins in the width direction.

In the embodiments, the second bin door is arranged on at least one side of the control bins in the width direction, maintenance can be carried out through the second bin door, thereby reducing land waste caused by reserving a maintenance channel more than 3 m between every two bin bodies of traditional bin bodies; and only a normal maintenance channel for paint repair is needed to be reserved between matts-shaped bin bodies, which improves the land investment returns of users and increases the energy yield per unit area for the users.

The embodiment of the present disclosure further provides the energy storage system which includes a power conversion apparatus and the above energy storage apparatus, and the power conversion apparatus is configured to electrically connect a power generation apparatus with the energy storage apparatus.

The embodiment of the present disclosure further provides the charging network which includes a charging pile and the above energy storage apparatus or the above energy storage system, and the energy storage apparatus is configured to provide electric energy for the charging pile.

### BRIEF DESCRIPTION OF THE DRAWINGS

FIG. 1 is a schematic structural diagram of a charging network provided by some embodiments of the present disclosure;
FIG. 2 is a schematic structural diagram of an energy storage system provided by some embodiments of the present disclosure;
FIG. 3 is a schematic structural diagram of an energy bin provided by some embodiments of the present disclosure;
FIG. 4 is a local schematic structural diagram of an energy bin in FIG. 3;
FIG. 5 is a schematic structural diagram of an energy bin provided by some embodiments of the present disclosure;
FIG. 6 is a schematic structural diagram of an energy bin provided by some embodiments of the present disclosure;
FIG. 7 is a front view of an energy storage apparatus provided by some embodiments of the present disclosure;
FIG. 8 is a top view of FIG. 7;
FIG. 9 is a front view of an energy storage apparatus provided by some embodiments of the present disclosure;
FIG. 10 is a schematic structural diagram of matched two adjacent bin bodies of an energy storage apparatus provided by some embodiments of the present disclosure;
FIG. 11 is a schematic structural diagram of a control module provided by some embodiments of the present disclosure;
FIG. 12 is a schematic structural diagram of a battery apparatus provided by some embodiments of the present disclosure.

### Reference numerals

1000, charging network; 2000, energy storage system; 100, energy storage apparatus; 10, energy bin; 12, energy unit; 13, first bin body; 131, first limiting member; 1311, limiting slot; 132, second limiting member; 1321, limiting hole; 133, limiting pin; 135, first bin door; 14, second connector; 141, low-voltage connector; 142, high-voltage connector; 15, fourth connector; 20, control bin; 21, second bin body; 22, control module; 221, main control module; 222, power distribution module; 223, general control module; 224, fire control module; 23, thermal management module; 80, battery apparatus; 81, box; 811, first box body; 812, second box body; 82, thermal management part; 200, charging pile; 300, power conversion apparatus; and 3000, power generation apparatus.

### DETAILED DESCRIPTION

Unless otherwise specified, all embodiments of the present disclosure and optional embodiments may be combined with each other to form a new technical solution.

Unless otherwise specified, all the technical features of the present disclosure and optional technical features may be combined with each other to form a new technical solution.

With the development of clean energy, electric energy is used as driving power in more and more devices, leading to the rapid development of power batteries that can store a large amount of electric energy and be subjected to multiple cycles of charging and discharging, such as lithium-ion batteries. Power batteries are not only used in energy storage power systems such as hydropower, thermal power, wind power and solar power stations, but also widely used in electric vehicles such as electric bicycles, electric motorcycles, and electric vehicles, as well as aerospace and other fields.

In the embodiments of the present disclosure, energy units can be secondary batteries, which refer to energy units that active materials can be activated by charging for continuous used after discharging.

The energy unit may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead storage battery and the like, which is not limited in the embodiments of the preset disclosure.

The energy unit generally includes an electrode assembly. Only as an example, an electrode assembly includes a positive electrode, a negative electrode, and a separator, and the separator is arranged between the negative electrode and the positive electrode. In the charging and discharging process of the energy unit, active ions (such as lithium ions) are intercalated and deintercalated between the positive electrode and the negative electrode in a reciprocating manner. The spacer is arranged between the positive electrode and the negative electrode, may play a role in preventing the positive electrode and the negative electrode from being short-circuited, and may enable active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite to each other in the thickness direction thereof, and the positive electrode active material is arranged on either or both of the two opposite surfaces of the positive electrode current collector.

As an example, a positive electrode current collector can be prepared from a metal foil, a conductive polymer material, or a carbon material or can be a composite current collector. For example, the positive electrode current collector is prepared from the metal foil, which can be a pure metal, an alloy, and a surface-treated metal, including but not limited to stainless steel, copper, aluminum, nickel, titanium or silver and the like. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of a group consisting of following materials: lithium-containing phosphate, lithium transition metal oxide and modified compounds thereof. However, there is no limitation on the materials in the present disclosure, and other traditional materials that can be used as the positive electrode active materials of the battery can also be used.

In some embodiments, the negative electrode may be a negative electrode plate, and the negative electrode plate may include a negative electrode current collector.

As an example, a negative electrode current collector can be prepared from a metal foil, a conductive polymer material, or a carbon material or can be a composite current collector. For example, the positive electrode current collector is prepared from the metal foil, which can be a pure metal, an alloy and a surface-treated metal, including but not limited to stainless steel, copper, aluminum, nickel, titanium or silver and the like. The composite current collector may include a high molecular material substrate and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the negative electrode plate can include a negative electrode current collector and a negative electrode material layer arranged on at least one surface of the negative electrode current collector.

In some embodiments, the material of the positive electrode current collector may be aluminum, and the material of the negative electrode current collector may be copper.

In some embodiments, the electrode assembly further includes a spacer, and the spacer is arranged between the positive electrode and the negative electrode.

In some implementations, the separator is a separator film. The type of the separator film is not particularly limited in the present disclosure and any well-known separator film of a porous structure having good chemical stability and mechanical stability may be selected.

As an example, the main material of the separator film may be selected from at least one of glass fiber, non-woven fabric, polyethylene, polypropylene, polyvinylidene fluoride, and ceramic. The separator film can be either a single-layer thin film or a multi-layer composite thin film without special limitations. When the separator film is a multi-layer composite film, the materials of the layers can be the same or different, which is not particularly limited. The separator may be an independent component positioned between the positive electrode and the negative electrode, or may be attached to the surfaces of the positive electrode and the negative electrode. A surface of a separator can be coated with an inorganic particle coating, an organic particle coating, or an organic/inorganic composite coating.

In some embodiments, the spacer is a solid electrolyte. The solid electrolyte is arranged between the positive electrode and the negative electrode and plays a role in transmitting ions and isolating the positive electrode and the negative electrode.

In some embodiments, the energy unit further includes an electrolyte, and the electrolyte plays a role in conducting ions between the positive electrode and the negative electrode. There is no special limitation on the type of the electrolyte in the present disclosure, and it can be selected according to requirements. The electrolyte can be liquid, gel or solid.

The electrode assembly can be of a winding structure, a stacking structure, or a hybrid structure of winding and stacking.

In some embodiments, the electrode assembly is of a winding structure. The positive electrode plate and the negative electrode plate are wound into the wound structure.

In some implementations, the electrode assembly is of a laminated structure.

As an example, a plurality of positive plates and a plurality of negative plates may be provided, and the plurality of positive plates and the plurality of negative plates are alternately stacked.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of separators may be provided and arranged between any adjacent positive electrode plates or negative electrode plates.

For example, the spacers can be continuously arranged between any adjacent positive electrode plates or negative electrode plates by folding or winding.

In some implementations, the electrode assembly may be cylindrical, flat, polyprismatic, or the like.

In some embodiments, the electrode assembly is provided with a tab, and the tab may lead current out of the electrode assembly. The tab includes a positive electrode tab and a negative electrode tab.

In some embodiments, the energy units can include shells. The shells can be steel shells, aluminum shells, plastic shells (such as polypropylene), composite metal shells (such as copper-aluminum composite shells) or aluminum-plastic films and the like. In some embodiments, the shells can be of a sealed structure or a non-sealed structure. As an example, when the shell is a non-sealed structure, the shell can protect the electrode assembly. A sealing bag is also included between the shell and the electrode assembly, and the sealing bag is used to encapsulate the electrode assembly and the electrolyte. Specifically, a sealing bag can be a bag-shaped insulation member or an aluminum-plastic film. The shells of the sealed structure are used for packaging the electrode assembly, the electrolyte and the like.

As an example, the energy units can be cylindrical energy units, prismatic energy units, soft package energy units or energy units in other shapes; the prismatic energy units include a square-shell energy unit, a blade-shaped energy unit, and a polygon-prism battery; and the polygon-prism battery is a hexagonal battery and the like, which is not particularly limited in the present disclosure.

In some embodiments, the shells include end covers and shell bodies, the shell bodies are provided with openings, and the end covers cover the openings. The shell bodies can be provided with one or more openings. One or a plurality of end covers may also be provided.

In some embodiments, the shells are provided with at least one electrode terminal which is electrically connected to the tab. The electrode terminals can be directly connected to the tabs and can also be indirectly connected to the tabs through current collecting components. The electrode terminals can be arranged on the end covers or the shell bodies.

In some embodiments, the energy storage apparatus includes an energy storage container and the like.

The requirement of a power station for the area energy density of the energy storage apparatus is increasing, and in order to increase the electric quantity, the total weight of bin bodies and parts in the bin bodies will be correspondingly increased. The energy storage apparatus is transported to a destination from a production place by land and/or sea, there is a weight limit in transportation by land and sea generally, leading a conflict between the increased energy density and the weight of the energy storage apparatus.

In view of this, the embodiments of the present disclosure provide a new technical solution, which is suitable for the energy storage apparatus, an energy storage system and a charging network including the energy storage apparatus.

The energy storage can be used for an energy storage power station, a wind power generation system, a solar power generation system, a mobile power system or a temporary power supply system and the like. Energy storage apparatuses can store electric energy as needed and output it at the appropriate time. For example, energy storage apparatuses can store electric energy during low electricity consumption periods and provide electric energy to relevant users or electrical devices during peak electricity consumption periods. The energy storage system provided by the embodiment of the present disclosure can be any electrical power system needing the energy storage apparatus.

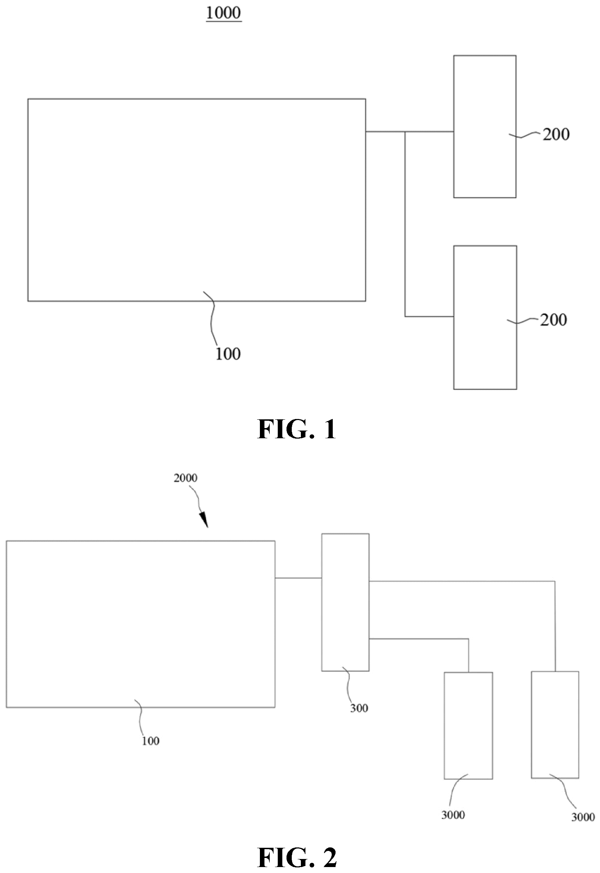

With reference to FIG. 1, FIG. 1 is a schematic structural diagram of a charging network 1000 provided by an embodiment of the present disclosure. The embodiment of the present disclosure provides the charging network 1000, and the charging network 1000 includes a charging pile 200 which is configured to charge an electrical device. The charging network 1000 can further include an energy storage apparatus 100 or an energy storage system 2000, and the energy storage apparatus 100 is electrically connected to the charging pile 200 and is configured to provide electric energy for the charging pile 200.

It is to be noted that the charging pile 200 is electrically connected to an energy unit 12 in the energy storage apparatus 100 through a cable, and the energy unit 12 can provide the stored electric energy for the charging pile 200. The charging pile 200 is provided with one or more connectors, and the connectors are connected to electrical device (such as a vehicle) so that energy can be supplemented to the electrical device. The charging network 1000 applies the energy storage apparatus 100, thus the reliability of the charging network 1000 can be effectively improved, and the deployment flexibility of the charging network 1000 can be improved.

The energy storage apparatus 100 can be located inside the charging pile 200 (such as a storage and charging all-in-one machine) or outside the charging pile 200.

In one charging network 1000, one charging pile 200 can be provided, and the energy storage apparatus 100 provides the electric energy for the one charging pile 200; and a plurality of charging piles 200 can be provided, and the energy storage apparatus 100 provides electric energy for the plurality of charging piles 200.

The energy storage apparatus 100 includes at least one energy bin 10. The energy bins 10 include first bin bodies 13 and energy units 12, the energy units 12 are accommodated in the first bin bodies 13 and are electrically connected to the charging piles 200, thus facilitating the energy units 12 to provide electric energy for the charging piles 200.

The energy storage apparatus 100 can include one or a plurality of energy bins 10.

In the embodiment of the present disclosure, "a plurality of" refers to a quantity of two or more.

As an example, as shown in FIG. 1, the charging network 1000 includes one energy storage apparatus 100 and two charging piles 200, and one energy storage apparatus 100 provides electric energy for the two charging piles 200.

With reference to FIG. 2, FIG. 2 is a schematic structural diagram of the energy storage system 2000 provided by an embodiment of the present disclosure. The embodiment of the present disclosure provides the energy storage system 2000. The energy storage system 2000 includes a power conversion apparatus, and the power conversion apparatus can be electrically connected to power generation apparatuses 3000 and the energy storage apparatus 100 so as to convert electric power provided by the power generation apparatuses 3000. The power conversion apparatus performs power conversion on the electric energy provided by the power generation apparatuses 3000 and then stores in the energy storage apparatus 100.

The power conversion apparatus is connected between the power generation apparatuses 3000 and the energy storage apparatus 100. The power generation apparatuses 3000 are configured to generate the electric energy, and the power generation apparatuses 3000 are also configured to store the generated electric energy in the energy storage apparatus 100 through the power conversion apparatus. The energy storage system 2000 applies the energy storage apparatus 100, and thus the operation reliability of the energy storage system 2000 can be effectively improved. In specific implementation, the power generation device can be particularly a solar panel, a hydroelectric power generation device, a thermal power generation device and the like. The specific type of the power generation device is not limited in the present disclosure.

As an example, as shown in FIG. 2, the energy storage system 2000 includes the energy storage apparatus 100 and the power conversion apparatus, the two power generation apparatuses 3000 transmit the generated electric energy to the power conversion apparatus, and the power conversion apparatus stores the electric energy in the energy storage apparatus 100.

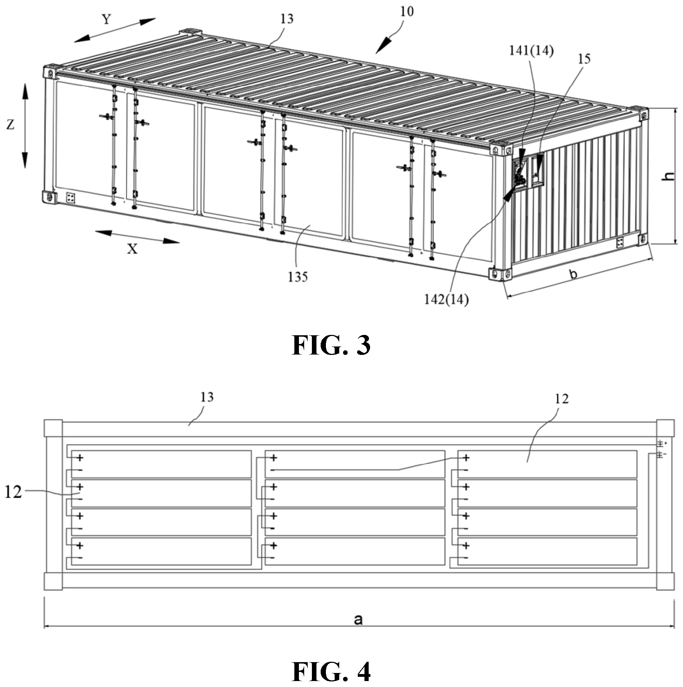

With reference to FIG. 3 to FIG. 9, some embodiments of the present disclosure provide an energy storage apparatus 100, and the energy storage apparatus 100 includes at least one energy bin 10 and at least one control bin 20.

The energy bins 10 includes the first bin bodies 13 and the energy units 12. The energy bins 10 includes the first bin bodies 13 and the energy units 12, and the energy units 12 are accommodated in the first bin bodies 13.

The control bins 20 are arranged outside the energy bins 10. That is, the control modules 22 do not occupy the space of the first bin bodies 13, which means that the first bin bodies 13 can be configured to accommodate more energy units 12.

The control bins 20 include second bin bodies 21 and control modules 22, and the control modules 22 are accommodated in the second bin bodies 21 and are configured to perform electrical control on the energy units 12 in the energy bins 10.

The first bin bodies 13 and/or the second bin bodies 21 can be cabinets or containers; the first bin bodies 13 and/or the second bin bodies 21 are internally provided with cavities; the cavities of the first bin body 13 can accommodate other parts of the energy bins 10; and the cavities of the second bin bodies 21 can accommodate other parts of the control bins 20. The first bin bodies 13 and/or the second bin bodies 21 can be of a hexahedron structure.

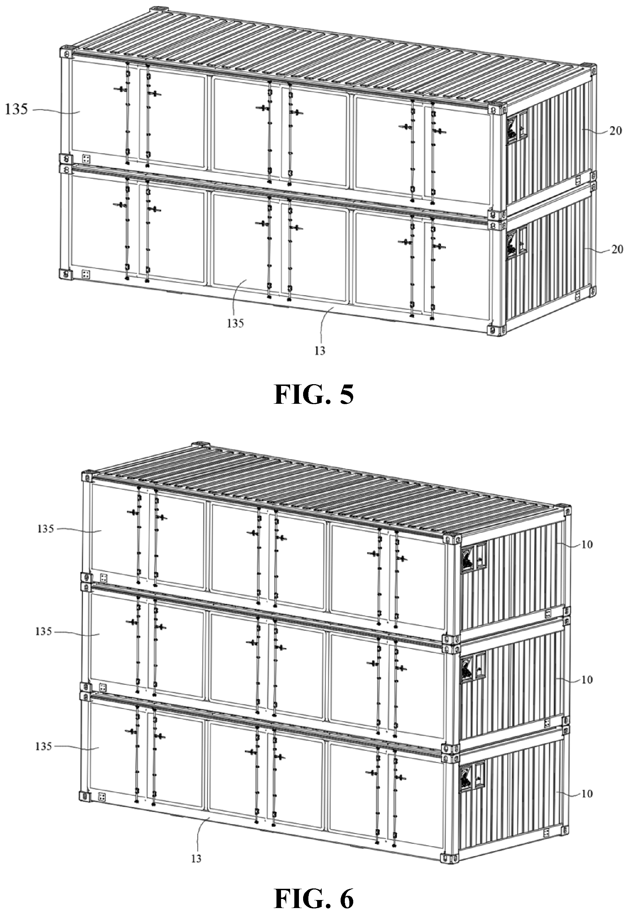

The first bin bodies 13 and/or the second bin bodies 21 are generally of a cuboid structure, the length directions and the width directions of the first bin bodies 13 and/or the second bin bodies 21 are both parallel to a horizontal plane, and the length directions of the first bin bodies 13 and/or the second bin bodies 21 are parallel to the longest edge of the cuboid structure of the first bin bodies 13 and/or the second bin bodies 21. The height directions of the first bin bodies 13 and/or the second bin bodies 21 are perpendicular to the ground. By way of example, as shown in FIG. 3 and FIG. 5, the length direction of the first bin bodies 13 is represented by X, the width direction of the first bin bodies 13 is represented by Y, and the height direction of the first bin bodies 13 is represented by Z.

By way of example, a plurality of energy bins 10 are provided and are arranged in the height direction of the energy storage apparatus 100, and it can be understood as that the plurality of energy bins 10 are stacked or connected in the height direction of the energy storage apparatus 100.

With reference to FIG. 3 to FIG. 9, the number of the energy bins 10 can be one, two or any number of more than two, for example, the energy storage apparatus 100 includes two energy bins 10 which are stacked in the height direction; for another example, the energy storage apparatus 100 includes three energy bins 10 which are stacked in the height direction.

By way of example, a plurality of control bins 20 are provided and are arranged in the height direction of the energy storage apparatus 100, and it can be understood as that the plurality of control bins 20 are stacked or connected in the height direction of the energy storage apparatus 100.

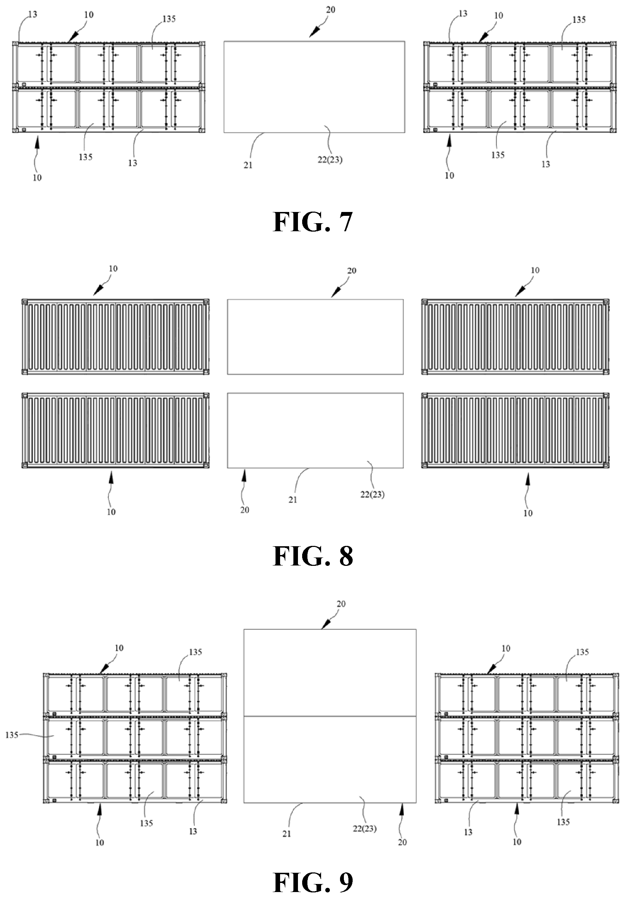

With reference to FIG. 7 to FIG. 9, the number of the control bins 20 can be one, two or any number of more than two, for example, the energy storage apparatus 100 includes two control bins 20 which are stacked in the height direction; for another example, the energy storage apparatus 100 includes three control bins 20 which are stacked in the height direction.

The energy units 12 can be battery cells or a battery apparatus 80 formed by electrically connecting a plurality of battery cells.

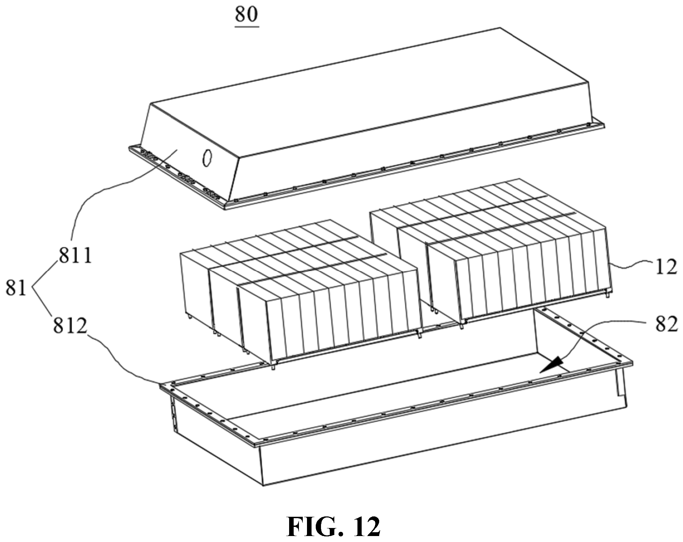

With reference to FIG. 4 and FIG. 12, the plurality of energy units 12 can form multi-layer and/or multi-row battery apparatuses 80, and each row or each row of battery apparatuses 80 includes a plurality of battery apparatuses 80.

The battery apparatus 80 in the embodiments of the present disclosure can include one or more battery cell assemblies for providing voltage and capacity. The battery cell assembly can include the plurality of battery cells, and the plurality of battery cells are connected in series or in parallel or in a series-parallel mode through a busbar component.

In some embodiments, a battery cell assembly is generally formed by arranging a plurality of battery cells.

As an example, the battery cell assembly can be a battery module, and the battery module is arranged by a plurality of battery cells and fixed to form an independent module. As an example, the battery module may be formed by binding a plurality of battery cells with a binding tape.

In some embodiments, the battery apparatus 80 can be a battery pack, and the battery pack includes a box 81 and one or more battery cell assemblies accommodated in the box 81.

As an example, the battery cell assemblies can be battery modules and can be accommodated in the box 81 by a mode of fixing the battery modules into the box 81.

By way of example, the battery cell assemblies can also be accommodated in the box 81 by a mode of directly fixing the battery cells into the box 81.

By way of example, with reference to FIG. 12, the box 81 can include a first box body 811 and a second box body 812. The first box body 811 and the second box body 812 are buckled so that an enclosure space is formed in the box 81 to accommodate the battery cell assemblies. The enclosure refers to covered or closed, and can be sealed or non-sealed. The first box body 811 can be a top cover or a bottom plate.

By way of example, the box 81 can include the top cover, a frame, and the bottom plate. The top cover and the bottom plate are respectively connected to the frame so that the enclosure space is formed in the box 81 to accommodate the battery cell assemblies.

By way of example, in the embodiments that the plurality of energy bins 10 are provided, the number of the energy units 12 accommodated in each energy bin 10 can be the same or different.

By way of example, the energy units 12 can be the battery modules or battery packs.

In some embodiments, with reference to FIG. 7 to FIG. 9, the control bins 20 include the control modules 22 which are configured to perform electrical control on the energy units 12 in the plurality of first bin bodies 13.

In the embodiments, the control modules 22 are arranged and can control the electric energy input or output of the energy units 12 to realize electrical control on the energy units 12.

By way of example, the sizes of the energy bins 10 in the height direction are less than the size of one standard container in the height direction.

That is, in the embodiments that the plurality of the energy bins 10 are provided, the sizes of all the energy bins 10 in the height direction are less than the size of one standard container in the height direction.

With reference to FIG. 3 and FIG. 4, the sizes a of the first bin bodies 13 in the length direction are the distance between both ends of the first bin bodies 13 in the length direction; the sizes b of the first bin bodies 13 in the width direction are the distance between both ends of the first bin bodies 13 in the width direction; and the sizes h of the first bin bodies 13 in the height direction are the distance between both ends of the first bin bodies 13 in the height direction. The sizes a, the sizes b, and the sizes h are the maximum sizes of outer contours of the first bin bodies 13 in the corresponding directions. The first bin bodies 13 can include eight corner fittings and six box walls, the eight corner fittings are located at eight corners of the cuboid structure of the first bin bodies 13 and protrude out of the box walls of the first bin bodies 13, the total span of two corner fittings arranged in the height direction is equal to the heights of the first bin bodies 13, the total span of two corner fittings arranged in the length direction is equal to the lengths of the first bin bodies 13, and the total span of two corner fittings arranged in the width direction is equal to the widths of the first bin bodies 13. When calculating the sizes of the first bin bodies 13, pipelines and cables which are connected to the first bin body 13 and located outside the first bin body 13 cannot be calculated as the sizes of the first bin bodies 13.

The standard containers can be the sizes of the standard containers in transportation, such as 10 chi, 20 chi, 30 chi, 40 chi or 45 chi, which meets the corresponding standard; and the length, width, and height of the standard containers have the corresponding values. The standard containers can refer to GB/T1413-2023 Series 1 Freight containers-Classification, Dimensions and Ratings.

The 10 chi can include: size of 2,991 mm in the length direction, with the tolerance of 0-5 mm; size of 2.438 mm in the width direction, with the tolerance of 0-5 mm; size of 2,438 mm or less than 2,438 mm in the height direction; and the tolerance of 0-5 mm.

The 20 chi can include: size of 6,058 mm in the length direction, with the tolerance of 0-6 mm; size of 2,438 mm in the width direction, with the tolerance of 0-5 mm; size of 2,896 mm, 2,591 mm or not greater than 2,438 mm in the height direction; and the tolerance of 0-5 mm.

The 30 chi can include: size of 9125 mm in the length direction, with the tolerance of 0-10 mm; size of 2,438 mm in the width direction, with the tolerance of 0-5 mm; size of 2,896 mm, 2,591 mm or not greater than 2,438 mm in the height direction; and the tolerance of 0-5 mm.

The 40 chi can include: size of 12192 mm in the length direction, with the tolerance of 0-10 mm; size of 2,438 mm in the width direction, with the tolerance of 0-5 mm; size of 2,896 mm, 2,591 mm or not greater than 2,438 mm in the height direction; and the tolerance of 0-5 mm.

The 45 chi can include: size of 13,716 mm in the length direction, with the tolerance of 0-10 mm; size of 2,438 mm in the width direction, with the tolerance of 350-5 mm; size of 2,591 mm or 2,896 mm in the height direction; and the tolerance of 0-5 mm.

In the embodiments of the present disclosure, for the first bin bodies 13 of various sizes, the size ±1%, ±2%, ±3%, ±4%, and ±5% can be regarded as the sizes within the tolerance range.

The sizes of the first bin bodies 13 in the height direction are set to be less than the size of one standard container in the height direction; by reducing the sizes of the first bin bodies 13, the total weight of the first bin bodies 13 accommodating the energy units 12 and other parts can be reduced, which is conducive to relieving the problem of overweight in transportation, and reducing the transportation cost of the energy storage apparatus 100.

In some embodiments, with reference to FIG. 4 to FIG. 9, the plurality of energy bins 10 are provided and are arranged in the height direction of the energy storage apparatus 100.

The plurality of energy bins 10 are arranged in the height direction of the energy storage apparatus 100, which is beneficial to improving the overall electric quantity and improving the area energy density.

By way of example, the sum of the sizes of the plurality of first bin bodies 13 in the height direction is set to be greater than the sum of the sizes of one or more standard containers in the height direction.

That is, on one hand, the sum of the sizes of the plurality of first bin bodies 13 in the height direction is set to be greater than the sum of the sizes of one or more standard containers in the height direction, which means making the sizes of the first bin bodies 13 in the height direction as large as possible, so that on the premise of meeting transport weight, the electric quantity of the energy storage apparatus 100 can be maximized. On the other hand, it is conducive to increasing both the volume and electric quantity of the energy storage apparatus 100, further reducing the use cost of the energy storage apparatus 100.

Definitely, in other embodiments, the sum of the sizes of the plurality of first bin bodies 13 in the height direction can be equal to the sum of the sizes of one or more standard containers in the height direction.

According to the energy storage apparatus 100 provided by the embodiment of the present disclosure, the sizes of the energy bins 10 in the height direction are set to be less than that of one standard container in the height direction, and by reducing the sizes of the energy bins 10, the manufacturing cost of the energy storage apparatus 100 can be reduced, moreover, the total weight of the energy bins 10 is decreased, which is conducive to relieving the problem of overweight in transportation, and reducing the transportation cost of the energy storage apparatus 100, thereby reducing the use cost of the energy storage apparatus 100. In addition, the control bins 20 are provided and are arranged outside the energy bins 10, that is, the control modules 22 do not occupy the spaces of the first bin bodies 13, which means that the first bin bodies 13 can be configured to accommodate more energy units 12, thereby improving the electric quantity and the energy density of the energy bins 10.

In some embodiments, the standard containers are 20-chi standard containers, and the heights of the standard containers are 2,896 mm, 2,591 mm or 2,438 mm.

In some embodiments, the size of each first bin body 13 in the height direction is greater than or equal to one third of the size of the standard container in the height direction, and is less than the size of one standard container in the height direction.

By way of example, the energy storage apparatus 100 may include three first bin bodies 13 which are stacked in the height direction, and the sum of the sizes of the three first bin bodies 13 in the height direction is greater than the size of one standard container in the height direction.

The sizes of the first bin bodies 13 cannot be infinitely small, and when the sizes of the first bin bodies 13 in the height direction is greater than or equal to one third of the size of the standard container in the height direction, the energy storage apparatus 100 is high in manufacturability, high in volume energy density and more convenient to transport and mount.

In some embodiments, the size of each first bin body 13 in the height direction is greater than or equal to half of the sizes of the standard containers in the height direction, and is less than the size of one standard container in the height direction.

By way of example, the energy storage apparatus 100 may include two first bin bodies 13 which are stacked in the height direction, and the sum of the sizes of the two first bin bodies 13 in the height direction is greater than the size of one standard container in the height direction.

When the sizes of the first bin bodies 13 in the height direction are greater than or equal to half of the sizes of the standard containers in the height direction, the energy storage apparatus 100 is high in manufacturability, high in volume energy density, and more convenient to transport and mount. For example, when the energy storage apparatus 100 includes the two stacked first bin bodies 13, the plurality of energy units 12 are placed in each first bin body 13, and the size of each first bin body 13 in the height direction is greater than or equal to half of the sizes of the standard containers in the height direction, and is less than the size of one standard container in the height direction. After the two first bin bodies 13 are stacked, the height is greater than that of one standard container, but the weight of each first bin body 13 accommodating the energy units 12 and other parts is low, and therefore each first bin body 13 accommodating the energy units 12 and other parts of the energy storage apparatus 100 can be independently transported; and after the first bin bodies 13 are stacked in site, the electric quantity of the energy storage apparatus 100 is high.

In some embodiments, the size of each first bin body 13 in the height direction is greater than or equal to one third of the sizes of the standard containers in the height direction, and is less than half of the sizes of the standard containers in the height direction.

By way of example, the plurality of energy units 12 can be arranged in each first bin body 13, or, the plurality of energy units 12 can be arranged in some of the first bin bodies 13; and no energy units 12 are arranged in the other first bin bodies 13, the control modules 22 can be arranged in the first bin bodies 13 without the energy units 12, and definitely, the control modules 22 can also be arranged in the first bin bodies 13 accommodating the plurality of energy units 12.

When the sizes of the first bin bodies 13 in the height direction are greater than or equal to one third of the sizes of the standard containers in the height direction, the energy storage apparatus 100 is high in manufacturability, high in volume energy density, and more convenient to transport and install. For example, when the energy storage apparatus 100 includes three stacked first bin bodies 13, the plurality of energy units 12 are arranged in each first bin body 13, and the size of each first bin body 13 in the height direction is greater than or equal to one third of the sizes of the standard containers in the height direction, and is less than one half of the sizes of the standard containers in the height direction. After the three first bin bodies 13 are stacked, the height is greater than that of one standard container, but the weight of each first bin body 13 accommodating the energy units 12 and other parts is low, so that each first bin body 13 accommodating the energy units 12 and other complements of the energy storage apparatus 100 can be transported independently; and after the first bin bodies 13 are stacked in site, the electric quantity of the energy storage apparatus 100 is high.

In addition, in some other embodiments, it can be that only one first bin body 13 meet the size requirements, and other first bin bodies 13 do not meet the requirements, for example, the sizes of some other first bin bodies 13 can be the sizes of the standard containers.

In some embodiments, m first bin bodies 13 are provided, the sum of the sizes of m1 first bin bodies 13 in the m first bin bodies 13 in the height direction is less than the sum of the sizes of n standard containers in the height direction, the sum of the sizes of m1+1 first bin bodies 13 in the m first bin bodies 13 in the height direction is greater than the sum of the sizes of the n standard containers in the height direction, m is greater than m1, m is greater than or equal to 2, and m1 is greater than or equal to n.

The sum of the sizes of the m1 first bin bodies 13 in the height direction is set to be less than the sum of the sizes of the n standard containers in the height direction, and m1 is greater than or equal to n, that is, the size of each first bin body 13 in the height direction is less than the size of one standard container in the height direction.

The m1+1 first bin bodies 13 in the m first bin bodies 13 refer to any m1+1 first bin bodies 13 in the m first bin bodies 13.

It can be that m1+1 is less than m, the sum of the sizes of the m1 first bin bodies 13 in the m first bin bodies 13 in the height direction is less than the sum of the sizes of the n standard containers in the height direction, and the sum of the sizes of the m1+1 first bin bodies 13 in the m first bin bodies 13 in the height direction is greater than the sum of the sizes of the n standard containers in the height direction.

It can also be that m1+1 is equal to m, the sum of the sizes of the m1 first bin bodies 13 in the m first bin bodies 13 in the height direction is less than the sum of the sizes of the n standard containers in the height direction, and the sum of the sizes of the m1+1 first bin bodies 13 in the m first bin bodies 13 in the height direction is greater than the sum of the sizes of the n standard containers in the height direction.

It is to be understood that m, m1, and n are all positive integers.

In some embodiments, m1=1, and n=1.

The energy storage apparatus 100 can include more than two first bin bodies 13, namely, more than two energy bins 10, for example, there are three, five, and eight first bin bodies 13 in the energy storage apparatus 100. It can also be that the energy storage apparatus 100 only includes two first bin bodies 13.

The heights of the first bin bodies 13 are set to be less than the height of one standard container, the sum of the heights of two stacked first bin bodies 13 is greater than the height of one standard container, and by reducing the sizes of the first bin bodies 13, the total weight of the first bin bodies 13 accommodating the energy units 12 and other parts can be reduced, which is conducive to relieving the problem of overweight in transportation, and reducing the transportation cost of the energy storage apparatus 100. On the other hand, the sum of the sizes of two first bin bodies 13 in the height direction is set to be greater than the sum of the sizes of one standard container in the height direction, which means making the size of at least one first bin body 13 in the height direction as large as possible, so that on the premise of meeting transport weight, the electric quantity of the energy storage apparatus 100 can be maximized. In addition, it is conducive to increasing both the volume and electric quantity of the energy storage apparatus 100, further reducing the use cost of the energy storage apparatus 100.

In some embodiments, m1=2, and n=1.

The heights of the first bin bodies 13 are set to be less than the height of one standard container, the sum of the heights of the three stacked first bin bodies 13 is greater than the height of one standard container, and by reducing the sizes of the first bin bodies 13, the energy storage apparatus 100 is high in manufacturability, high in volume energy density, and more convenient to transport and install. On the other hand, the sum of the sizes of the three first bin bodies 13 in the height direction is set to be greater than the sum of the size of one standard container in the height direction, and on the premise that the transportation weight is met, the electric quantity of the energy storage apparatus 100 can be increased as much as possible. In addition, it is conducive to increasing both the volume and electric quantity of the energy storage apparatus 100, further reducing the use cost of the energy storage apparatus 100.

In some embodiments, m1=2, and n=2.

The heights of the first bin bodies 13 are set to be less than the height of one standard container, the sum of the heights of the three stacked first bin bodies 13 is greater than the sum of the heights of two stacked standard containers, and by reducing the sizes of the first bin bodies 13, the energy storage apparatus 100 is high in manufacturability, high in volume energy density, and more convenient to transport and install. On the other hand, the sum of the sizes of the three first bin bodies 13 in the height direction is set to be greater than the sum of the size of one standard container in the height direction, and on the premise that the transportation weight is met, the electric quantity of the energy storage apparatus 100 can be increased as much as possible. In addition, it is conducive to increasing both the volume and electric quantity of the energy storage apparatus 100, further reducing the use cost of the energy storage apparatus 100.

The m first bin bodies 13 can have the same or different sizes in the height direction.

In some embodiments, with reference to FIG. 5 to FIG. 9, the energy storage apparatus 100 further includes connecting mechanisms (not shown in the figure), and the connecting mechanisms are configured to connect every two adjacent first bin bodies 13 in the height direction. The connecting mechanisms include supporting members, and each supporting member is arranged between every two adjacent first bin bodies 13 in the height direction; the sum total of the sum of the sizes of the m1 first bin bodies 13 in the m first bin bodies 13 in the height direction and the sum of the sizes of m1-1 supporting members in the height direction is less than the sum of the sizes of the n standard containers in the height direction, and the total sum of the sum of the sizes of the m1+1 first bin bodies 13 in the m first bin bodies 13 in the height direction and the sum of the sizes of m1 supporting members in the height direction is greater than the sum of the sizes of the n standard containers in the height direction.

Optionally, the first bin bodies 13 assembled and transported in the height direction are connected and fixed by the supporting members, and thus the sizes of the n standard containers assembled by the m1 first bin bodies 13 further include the heights of the supporting members therebetween. That is, when arranging the supporting members, the sizes of some of the m1 first bin bodies 13 in the height direction can be the sum of the heights of the first bin bodies 13 and the heights of the connected supporting members. It is because that the supporting members connected to the first bin bodies 13 in the height direction occupy the heights of the first bin bodies 13 to a certain extent.

By way of example, when the m1 first bin bodies 13 are assembled, fixed and transported by the supporting members, the total sum of the sum of the sizes of the m1 first bin bodies 13 in the height direction and the sum of the sizes of the m1-1 supporting members in the height direction is less than the sum of the sizes of the n standard containers in the height direction, and the total sum of the sum of the sizes of the m1+1 first bin bodies 13 in the m first bin bodies 13 in the height direction and the sum of the sizes of the m1 supporting members in the height direction is greater than the sum of the sizes of the n standard containers in the height direction. Optionally, the number of the supporting members among the m1 first bin bodies 13 can be less than m1-1, and when the first bin bodies 13 are assembled to reach the sizes of the standard containers, the sizes include the sum of the sizes of the m1 first bin bodies 13 and the sum of the sizes of the actual supporting members.

The first bin bodies 13 are connected through the connecting mechanisms, so that the first bin bodies 13 can be stably stacked. When transporting the first bin bodies 13, the total sum of the sum of the sizes of the m1 first bin bodies 13 in the height direction and the sum of the sizes of the supporting members arranged between every two adjacent first bin bodies 13 in the m1 first bin bodies 13 in the height direction is less than the sum of the heights of the n standard containers, the total sum of the sum of the sizes of the m1+1 first bin bodies 13 in the m first bin bodies 13 in the height direction and the sum of the sizes of the m1 supporting members in the height direction is greater than the sum of the sizes of the n standard containers in the height direction, which is conducive to increasing both the volume and electric quantity of the energy storage apparatus 100, further reducing the use cost of the energy storage apparatus 100.

According to the energy storage apparatus 100 provided by the embodiments of the present disclosure, when the supporting members are used during transportation, and the supporting members are not needed between the first bin bodies 13 which are assembled into the energy storage apparatus 100, that "the sum of the sizes of the m1 first bin bodies 13 in the height direction is less than the sum of the sizes of the n standard containers in the height direction, and the sum of the sizes of the m1+1 first bin bodies 13 in the height direction is greater than the sum of the sizes of the n standard containers in the height direction" means that the heights of the supporting members are included. That is, the sum of the sizes of the m1 first bin bodies 13 in the height direction is less than the difference between the sum of the sizes of the n standard containers in the height direction and the sum of the heights of the used supporting members, and the sum of the sizes of the m1+1 first bin bodies 13 in the height direction is greater than the difference between the sum of the sizes of the n standard containers in the height direction and the sum of the heights of the used supporting members. This case is also within the scope of the embodiment of the present disclosure.

In some embodiments, with reference to FIG. 3 to FIG. 9, the size of each first bin body 13 in the length direction is consistent with the size of the standard container in the length direction, and the size of each first bin body 13 in the width direction is consistent with the size of the standard container in the width direction.

In the embodiments, the sizes of the first bin bodies 13 in the length direction are set to be consistent with the sizes of the standard containers in the length direction, the sizes of the first bin bodies 13 in the width direction are set to be consistent with the sizes of the standard containers in the width direction, which is conducive to matching with transportation tools and lifting appliances of existing standard containers, and reducing the transportation cost of the energy storage apparatus 100, thereby reducing the use cost of the energy storage apparatus 100.

The sizes of the first bin bodies 13 in the height direction are set to be less than the size of one standard container in the height direction, the first bin bodies 13 do not exceed the heights of the corresponding standard containers transported by sea or land in the height direction of the first bin bodies 13 during the transportation process, which is conducive to facilitating the transportation of the first bin bodies 13, and reducing the transportation cost. The sizes of the first bin bodies 13 in the length direction and the sizes of the first bin bodies 13 in the width direction are consistent with those of the standard containers, so that the horizontal area occupied by the first bin bodies 13 during transportation is consistent with that of the standard containers, which is conducive to matching with the transportation tools and lifting appliances of existing standard containers, and reducing the transportation cost of the energy storage apparatus 100, thereby reducing the use cost of the energy storage apparatus 100.

Moreover, the sum of the sizes of the m1 first bin bodies 13 in the m first bin bodies 13 in the height direction is less than the sum of the sizes of the n standard containers in the height direction, and the sum of the sizes of the m1+1 first bin bodies 13 in the m first bin bodies 13 in the height direction is greater than the sum of the sizes of the n standard containers in the height direction, which is conducive to increasing both the volume and electric quantity of the energy storage apparatus 100, further reducing the use cost of the energy storage apparatus 100; and by reducing the sizes of the first bin bodies 13, the total weight of the first bin bodies 13 accommodating the energy units 12 and other parts can be reduced, which is conducive to relieving the problem of overweight in transportation, and reducing the transportation cost of the energy storage apparatus 100. On the other hand, the sum of the sizes of the m1+1 first bin bodies 13 in the m first bin bodies 13 in the height direction is greater than the sum of the sizes of the n standard containers in the height direction, which means making the size of at least one first bin body 13 in the height direction as large as possible, so that on the premise of meeting transport weight, the electric quantity of the energy storage apparatus 100 can be maximized. In addition, it is conducive to increasing both the volume and electric quantity of the energy storage apparatus 100, further reducing the use cost of the energy storage apparatus 100.

In some embodiments, the weight of the energy bins 10 is M, and M is less than or equal to 45 tons.

The energy bins 10 refer to bin bodies that can be independently transported and independently hoisted.

By way of example, the weight of the energy bins 10 can be a point value of any one or a point value between any two of 10 tons, 15 tons, 20 tons, 25 tons, 30 tons, 35 tons, or 45 tons.

During hoisting the energy bins 10, it helps hoisting of a related hoisting apparatus, facilitating the transfer of the energy bins 10.

In order for a single energy bin 10 to meet the requirements for the transportation limits in some countries, the overall weight of the single energy bin 10 is controlled to be within 45 tons, the integration degree of the single energy bin 10 is as high as possible, thus reducing the workload of mounting on site; and moreover, the energy per the unit area is improved, and the cost input of customers is reduced.

In the embodiments, the sum of the sizes of the m1 first bin bodies 13 in the height direction is set to be less than the sum of the sizes of the n standard containers in the height direction, the sum of the sizes of the m1+1 first bin bodies 13 in the height direction is set to be greater than the sum of the sizes of the n standard containers in the height direction, and the weight of the energy bins 10 is controlled to be not greater than 45 tons, thus the energy bins 10 can be normally transported and hoisted in a plurality of transportation scenes such as transporting by land or sea, and to a certain extent, it can prevent the problem of increased transportation costs caused by the energy bins 10 being overweight, which could exceed the load limits of roads, bridges, and lifting appliances, thereby necessitating disassembly for transport or requiring specialized devices for transfer.

In some embodiments, with reference to FIG. 3, the height of each energy bin 10 is h, 850mm ≤ h < 2896mm. That is, the height of each first bin body 13 is h.

By way of example, the heights of the energy bins 10 can be a point value of any one or a point value between any two of 850 mm, 900 mm, 950 mm, 1,000 mm, 1,050 mm, 1,100 mm, 1,150 mm, 1,200 mm, 1,300 mm, 1,400 mm, 1,500 mm, 1,600 mm, 1,800 mm, 2,000 mm, 2,100 mm, 2,200 mm, 2,300 mm, 2,400 mm, 2,500 mm, 2,600 mm, 2,700 mm, 2,800 mm, and 2,895 mm; and it needs to meet that the sum of the m1 energy bins 10 in the height direction is less than the sum of the sizes of the n standard containers in the height direction, and the sum of the m1+1 energy bins 10 in the m energy bins 10 in the height direction is greater than the sum of the sizes of the n standard containers in the height direction.

In the embodiments, the heights of the energy bins 10 are set to be 850mm ≤ h < 2896mm, the total weight of the energy bins 10 can be controlled to be not greater than 45 tons, the volume and electric quantity of the energy bins 10 can be increased as much as possible, thus further reducing the use cost of the energy storage apparatus 100.

In some embodiments, the heights of the energy bins 10 is h, 1300mm ≤ h ≤ 2400mm.

By way of example, the heights of the energy bins 10 can be a point value of any one or a point value between any two of 1300 mm, 1350 mm, 1400 mm, 1450 mm, 1500 mm, 1550 mm, 1600 mm, 1650 mm, 1700 mm, 1750 mm, 1800 mm, 1850 mm, 1900 mm, 1950 mm, 2000 mm, 2050 mm, 2100 mm, 2150 mm, 2200 mm, 2250 mm, 2300 mm, 2350 mm, and 2400 mm; and it needs to meet that the sum of the m1 energy bins 10 in the height direction is less than the sum of the sizes of the n standard containers in the height direction, and the sum of the m1+1 energy bins 10 in the m energy bins 10 in the height direction is greater than the sum of the sizes of the n standard containers in the height direction.

According to the energy storage apparatus 100 provided by the embodiment of the present disclosure, the sum of the sizes of the m1 energy bins 10 in the height direction is set to be less than the sum of the sizes of the n standard containers in the height direction, and m1≥n, that is, the sizes of the energy bins 10 in the height direction are less than the size of one standard container in the height direction; on one hand, by reducing the sizes of the first bin bodies 13, the total weight of the energy bins 10 can be less than the weight of one standard container, thus fitting standard lifting appliances, namely, fitting the transportation tools of existing standard containers under the condition that the weight does not exceed the transportation and road limit, which is conducive to relieving the problem of overweight in transportation, and reducing the transportation cost of the energy storage apparatus 100, thereby reducing the use cost of the energy storage apparatus 100; and on the other hand, the sum of the sizes of the m1+1 first bin bodies 13 in the height direction is set to be greater than the sum of the sizes of the n standard containers in the height direction, which is conducive to increasing both the volume and electric quantity of the energy bins 10, further reducing the use cost of the energy storage apparatus 100.

It is to be noted that the specific arrangement mode of the control bins 20 and the energy bins 10 are not limited here.

By way of example, in some embodiments, the control bins 20 can be connected to the energy bins 10.

In some other embodiments, with reference to FIG. 7 to FIG. 9, the control bins 20 and the energy bins 10 can be arranged separately.

Separate arranging refers to that the control bins 20 and the energy bins 10 are not fixedly connected, that is, the first bin bodies 13 and second bin bodies 21 are not welded, clamped, locked, or connected through fixing members; and by way of example, the control bins 20 and the energy bins 10 can abut against each other or be arranged at intervals, but the control bins 20 and the energy bins 10 can be connected by connecting pipelines.

In the embodiments, the control bins 20 and the energy bins 10 are arranged separately; the energy bins 10 can be stacked for use on site, therefore, the area energy density is improved, and the energy bins 10 only accommodate the energy units 12 as much as possible; the control bins 20 and the energy bins 10 are arranged separately, which is conducive to reducing the door opening or operation of the energy bins 10, and reducing condensate water inside the energy bins 10; and the control bins 20 and the energy bins 10 are separated, thus an operator is safe during operating the control bins 20.

In some embodiments, with reference to FIG. 7 to FIG. 9, the control bins 20 are arranged at the ends of the energy bins 10 in the length direction.

That is, the control bins 20 and the energy bins 10 are arranged in the length direction of the energy storage apparatus 100. The plurality of energy bins 10 can be arranged in the length direction of the energy storage apparatus 100, each control bin 20 is arranged between every two adjacent energy bins 10 and is located at the end of the corresponding energy bin 10 in the length direction, thereby being conducive to realizing the control of the control bins 20 on the plurality of energy bins 10.

In some embodiments, the control bins 20 are arranged on the sides of the energy bins 10 in the width direction.

That is, the control bins 20 and the energy bins 10 are arranged in the width direction of the energy storage apparatus 100. The plurality of energy bins 10 can be arranged in the width direction of the energy storage apparatus 100, each control bin 20 is arranged between every two adjacent energy bins 10 and is located at the end of the corresponding energy bin 10 in the width direction, thereby being conducive to realizing the control of the control bins 20 on the plurality of energy bins 10.

In some embodiments, the control bins 20 and the energy bins 10 are arranged in the height direction of the energy storage apparatus 100.

The control bins 20 can be arranged on the tops of the energy bins 10, or the energy bins 10 are arranged on the tops of the control bins 20.

The control bins 20 can be connected to the energy bins 10, or the control bins 20 and the energy bins 10 are arranged separately.

In some embodiments, with reference to FIG. 9, a plurality of control bins 20 are provided and are arranged in the height direction of the energy storage apparatus 100.

The plurality of control bins 20 are arranged in the height direction of the energy storage apparatus 100, which is conducive to reducing the space occupied by all the control bins 20.

The plurality of control bins 20 are arranged, which is conducive to realizing maintenance and replacement to the control bins 20 and facilitating the control to the plurality of energy bins 10.

In some embodiments, with reference to FIG. 3 and FIG. 7, at least some of the control bins 20 include first connectors which are electrically connected to the control modules 22; each energy bin 10 includes a second connector 14; the second connectors 14 are electrically connected to the plurality of energy units 12; and the first connectors are matched with the second connectors 14.

At least some of the control bins 20 include the first connectors, namely, some of the control bins 20 include the first connectors, the other control bins 20 do not include the first connectors, or all the control bins 20 include the first connectors.

The first connectors can be directly connected to the second connectors 14 to realize the matching therebetween, for example, the first connectors are in plug-in fit with the second connectors 14. The first connectors are fixed to the control bins 20, and the second connectors 14 are movably arranged in the energy bins 10; or, the first connectors are movably arranged in the control bins 20, and the second connectors 14 are fixedly arranged in the energy bins 10; or the first connectors and the second connectors 14 are movably arranged in the control bins 20 and the energy bins 10 respectively. The first connectors can include a plurality of connecting parts, and the connecting parts are in one-to-one correspondence with the second connectors 14 to realize the connection of the first connectors and the second connectors 14.

By way of example, the second connectors 14 are on the sidewalls of the first bin bodies 13 for example.

The first connectors and the second connectors 14 can be connected through connecting members, and the connecting members can be cables. The first connectors and the second connectors 14 can be fixed to the control bins 20 and the energy bins 10 respectively; or, the first connectors can also be fixed to the control bins 20, and the second connectors 14 are movably arranged in the energy bins 10; or, the first connectors can also be movably arranged in the control bins 20, and the second connectors 14 are fixedly arranged in the energy bins 10; or, the first connectors and the second connectors 14 can also be movably arranged in the control bins 20 and the energy bins 10 respectively.

By way of example, the first connectors are fixedly arranged to the control bins 20, the two second connectors 14 are fixed to the two energy bins 10 respectively, and the first connectors and the second connectors 14 are connected through the cables. The cables can be quick-plug cables, with both ends provided with quick connectors; and the two quick connectors are connected to the first connectors and the second connectors 14 respectively.

In the embodiments that the first connectors and the second connectors 14 are connected through the cables, the cables can at least partially penetrate the control bins 20 and/or the energy bins 10, or the cables partially penetrates through the control bins 20 and/or the energy bins 10; or, ports of the first connectors are be located outside the control bins 20, and the cables are completely located outside the control bins 20; or, ports of the second connectors 14 are located outside the energy bins 10, and the cables are completely located outside the energy bins 10.

In the embodiments, through cooperation of the first connectors and each second connector 14, the control bins 20 and the energy bins 10 can be connected rapidly, thus the control bins 20 and the energy bins 10 can be connected more conveniently, and the control modules 22 and energy units 12 can be connected more conveniently.

In some embodiments, with reference to FIG. 7 and FIG. 9, the control bins 20 correspond to the energy bins 10 one to one; or, one control bin 20 performs electrical control on the energy units 12 in the plurality of energy bins 10.

The control bins 20 correspond to the energy bins 10 one by one, that is, one control bin 20 correspondingly controls one energy bin 10, that is, one for one, one control bin 20 perform electrical control on the energy units 12 in one energy bin 10.

One control bin 20 perform electrical control on the energy units 12 in the plurality of energy bins 10, that is, one control bin 20 correspondingly controls the plurality energy bins 10, namely, one for more.

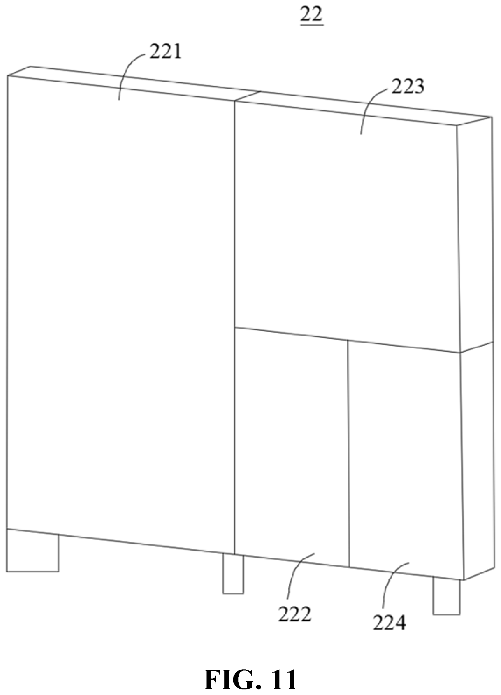

In some embodiments, with reference to FIG. 11, the control modules 22 include general control modules 223, and the general control modules 223 are electrically connected to the energy units 12 in at least one first bin body 13.

The general control modules 223 can be configured to perform monitoring and management functions on the energy units 12.

The general control modules 223 are electrically connected to the energy units 12 in at least one first bin body 13, namely, the general control modules 223 can be electrically connected to the energy units 12 in one first bin body 13, that is, one general control module 223 can provide monitoring and management functions on the energy units 12 in one first bin body 13; and the general control modules 223 can be electrically connected to the energy units 12 in the plurality of first bin bodies 13, that is, one general control module 223 can provide monitoring and management functions on the energy units 12 in the plurality of first bin bodies 13.

In some embodiments, with reference to FIG. 11, the control modules 22 include main control modules 221 which are electrically connected to the general control modules 223. One main control module 221 is configured to control the input or output of the electric energy of the energy units 12 in one energy bin 10, or, one main control module 221 is configured to control the input or output of the electric energy of the energy units 12 in the plurality of energy bins 10.

The main control modules 221 are configured to control the input and output of high-voltage electric energy of the energy units 12 in the energy bins 10.

The main control modules 221 are electrically connected to the general control modules 223, and the general control modules 223 are configured to control on-off of the main control modules 221.

One main control module 221 is configured to control the input or output of the electric energy of the energy units 12 in one energy bin 10, thereby facilitating the connection between different main control modules 221 and the energy units 12 in different energy cabins 10.

One main control module 221 is configured to control the input or output of the electric energy of the energy units 12 in the plurality of energy cabins 10, thereby being conducive to saving the space and reducing the cost.

In some embodiments, with reference to FIG. 11, the control modules 22 include fire control modules 224.

The fire control modules 224 are configured to control fire elements to act when a fire occurs due to temperature imbalance in the energy bins 10; and the fire elements can be fire extinguishers and the like and can be arranged in the first bin bodies 13.

In some embodiments, with reference to FIG. 11, the control modules 22 include power distribution modules 222; and the main control modules 221, the general control modules 223, and the fire control modules 224 are all electrically connected to the power distribution modules 222.

The power distribution modules 222 are configured to electrically connect the main control modules 221, the general control modules 223, and the fire control modules 224, so as to facilitate the connection of circuits of the main control modules 221, the general control modules 223, and the fire control modules 224 as well as the normal operation of the main control modules 221, the general control modules 223, and the fire control modules 224.

In some embodiments, with reference to FIG. 7 to FIG. 9, the number of the energy bins 10 is greater than or equal to the number of the control bins 20.

In the embodiments that the number of the energy cabins 10 is greater than the number of the control cabins 20, each control cabin 20 can perform electrical control on the energy units 12 in the plurality of energy cabins 10, or some of the control cabins 10 correspond to the energy cabins 10 one by one, and each of the other control cabins 20 can perform electrical control on the energy units 12 in the plurality of energy cabins 10.

In the embodiments that the number of the energy cabins 10 is equal to the number of the control cabins 20, each control cabin 20 can perform electrical control on the energy units 12 in the plurality of energy cabins 10.

In some embodiments, with reference to FIG. 7 to FIG. 9, the energy storage apparatus 100 includes thermal management modules 23, and the thermal management modules 23 are configured to manage the temperatures of the energy units 12 in all the energy bins 10 and are accommodated in the control bins 20.

In the embodiments, the thermal management modules 23 are arranged and can manage the temperatures of the energy units 12, so that the risk of the temperature runaway of the energy units 12 is reduced.

The thermal management modules 23 can be liquid cooling units, air conditioners, ground source cooling devices or sea liquid cooling devices.

The thermal management modules 23 include heat exchange units, for example, liquid cooling units, with reference to FIG. 7 to FIG. 9, the thermal management modules 23 perform heat exchange on the energy units 12 through heat exchange pipelines (for example, liquid cooling pipelines), thereby realizing temperature management on the energy units 12 and reducing the risk of temperature runaway of the energy units 12.

By way of example, the thermal management modules 23 are located on the top of the topmost control bin 20.

In the embodiments, the thermal management modules 23 are located on the top of the topmost control bin 20, and the upper portions of the thermal management modules 23 are not shielded by shielding objects, which facilitates heat dissipation of the thermal management modules 23, thereby prolonging the service life of the energy storage apparatus 100. Meanwhile, the thermal management modules 23 shield the heat radiation of the top, and thus the influence of the heat radiation on the control modules 22 is reduced.

In some embodiments, one thermal management module 23 is configured to manage the temperatures of the energy units 12 in one energy bin 10, or, one thermal management module 23 is configured to manage the temperatures of the energy units 12 in the plurality of energy bins 10.

One thermal management module 23 is configured to manage the temperature of the energy units 12 in one energy bin 10, thereby facilitating the connection between different thermal management modules 23 and the energy units 12 in different energy bins 10, and being conducive to improving the heat exchange efficiency.

One thermal management module 23 is configured to manage the temperatures of the energy units 12 in the plurality of energy bins 10, thereby being conducive to saving the space and reducing the cost.

In some embodiments, the thermal management modules 23 include fans and condensers; the fans and the condensers are located on the tops of the control bins 20; and ventilation openings are formed in the top walls and/or sidewalls of the control bins 20 and configured to perform ventilation on the thermal management modules 23.

By way of example, the thermal management modules 23 include a cooling circulation loop and a refrigerant circulation loop; thermal management parts 82 forms a part of the cooling circulation loop, and the condenser forms a part of the refrigerant circulation loop. The thermal management modules 23 and the energy units 12 are independent of each other, thus reducing the risk of mutual interference between the thermal management modules 23 and the energy units 12.

Cooling liquid can circularly flow in the cooling liquid circulation loop, and can circularly flow through the thermal management parts 82 to exchange heat with the energy units 12 so as to cool the energy units 12; and the cooling liquid after heat exchange with the energy units 12 can circularly flow through an evaporator and exchange heat with the evaporator so as to exchange the heat exchanged from the energy units 12 to the evaporator, thereby decreasing the temperature of the cooling liquid.

The condenser is a part for exchanging heat with a refrigerant that flows through the condenser.

The evaporator is arranged in the cooling liquid circulation loop and the refrigerant circulation loop. A cooling liquid flow channel and a refrigerant flow channel arranged formed in the evaporator; the cooling liquid flow channel participates in forming the cooling liquid circulation loop, and the cooling liquid flow channel is configured to allow the cooling liquid to flow therein; the refrigerant flow channel participates in forming the refrigerant circulation loop, and the refrigerant flow channel is used for allowing the refrigerant to flow therein; and the cooling liquid flow channel and the refrigerant flow channel are not in communication, so that the cooling liquid and the refrigerant are not mixed. In the evaporator, the cooling liquid can exchange heat with the refrigerant, and particularly, the heat of the cooling liquid can be exchanged to the refrigerant, so that the evaporator can decrease the temperature of the cooling liquid flowing through the evaporator.

By way of example, the fans are configured to cool the condenser. By way of example, the fans are configured to cool the condensers.

The ventilation openings are formed in the top walls of the control bins 20, and it can be that the whole top walls of the control bins 20 are opened to form a ventilation opening. Or, the top walls of the control bins 20 are partially opened to form one ventilation opening; for example, the sides of the top walls of the control bins 20 in the length direction are provided with openings, so that the top walls of the control bins 20 partially form the ventilation opening.

By way of example, the ventilation openings in the top walls of the control bins 20 can be configured to exhaust air, and the ventilation openings in the side walls of the control bins 20 can be configured to introduce air.

In the embodiments, the ventilation openings are located in the top walls and/or sidewalls of the control bins 20, which facilitates the heat dissipation of the thermal management modules 23, thus more heat dissipation channels can be provided for the thermal management modules 23, thereby improving the temperature control effect of the thermal management modules 23.

In some embodiments, with reference to FIG. 7 to FIG. 9, at least some of the thermal management modules 23 and at least some of the control modules 22 are accommodated in the same control bin 20.

That is, at least one control bin 20 accommodates the thermal management modules 23 and the control modules 22 at the same time, so that the control bins 20 can perform electrical control the energy units 12 in the energy bins 10 and manage the temperatures of the energy units 12, thus improving the integration degrees of the control bins 20.v

By way of example, the control bins 20 further include first separators; the first separators separate the thermal management modules 23 from the control modules 22, which reduces the risk of interference between the thermal management modules 23 and the control modules 22, thereby improving the reliability of the energy storage apparatus 100.

The thermal management modules 23 and the control modules 22 are separated by the first separators, and the first separators can separate the thermal management modules 23 from the control modules 22, so that the interference of the thermal management modules 23 to the control modules 22 can be reduced, namely, the electromagnetic interference of a high-voltage line to low voltage can be reduced, and the influence of external rainfall or exposure to intensive sunlight on the control modules 22 can be reduced.

In some embodiments, the thermal management modules 23 and the control modules 22 are accommodated in different control bins 20.

That is, the thermal management modules 23 and the control modules 22 are independent of each other, so that the interference of the thermal management modules 23 for the control modules 22 can be further reduced.

In some embodiments, with reference to FIG. 4 and FIG. 12, the energy storage apparatus 100 includes a plurality of battery apparatuses 80, each battery apparatus 80 includes a thermal management part 82 and the plurality of energy units 12, and the thermal management part 82 is configured to adjust the temperature of the energy units 12. at least some of the control bins 20 include third connectors, each energy bin 10 includes a fourth connector 15; the third connectors communicate with the thermal management modules 23, the fourth connectors 15 communicate with the thermal management parts 82, and each third connector is matched with the corresponding fourth connector 15.

By way of example, the thermal management parts 82 can be plate-shaped or tube-shaped, and flow channels are formed in the thermal management parts 82 and can be configured to introduce fluid to heat or cool the energy units 12. The fluid can be refrigerants or cooling liquid.

When the battery apparatuses 80 are battery modules, the thermal management parts 82 can be bottom plates, top plates or side plates of the battery modules and can also be located between adjacent energy units 12.

When the battery apparatuses 80 are the battery packs, with reference to FIG. 12, the thermal management parts 82 can be part of a box 81 or the thermal management parts 82 are located in accommodating spaces of the box 81, and the thermal management parts 82 can also be located between the adjacent energy units 12.

At least some of the control bins 20 include the third connectors, that is, some of the control bins 20 include the third connectors, the other control bins 20 do not include the third connectors, or all the control bins 20 include the third connectors.

By way of example, the control bins 20 provided with the thermal management modules 23 include third connectors, and the control bins 20 not provided with the thermal management modules 23 do not include the third connectors.

The third connectors can directly communicate with the fourth connectors 15 to realize the matching therebetween, for example, each third connectors is in plug-in fit with the corresponding fourth connector 15. The third connectors can be fixed to the control bins 20, and the fourth connectors 15 are movably arranged in energy bins 10; or, the third connectors are movably arranged in the control bins 20, and the fourth connectors 15 are fixedly arranged in the energy bins 10; or, the third connectors and the fourth connectors 15 are movably arranged in the control bins 20 and the energy bins 10 respectively. The third connectors can include a plurality of connecting parts, and the connecting parts are in one-to-one correspondence with the fourth connectors 15 to realize the communication between the third connectors and the plurality of fourth connectors 15.

The third connectors can also communicate with the fourth connectors 15 through the connecting members, and the connecting members can be pipelines. The third connectors and the fourth connectors 15 can be fixed to the control bins 20 and the energy bins 10 respectively; or, the third connectors can also be fixed to the control bins 20, and the fourth connectors 15 are movably arranged in the energy bins 10; or, the third connectors can also be movably arranged in the control bins 20, and the fourth connectors 15 are fixedly arranged in the energy bins 10; or, the third connectors and the fourth connectors 15 can also be movably arranged in the control bins 20 and the energy bins 10 respectively.

As an example, the thermal management modules 23 are provided with the third connectors; each energy bin 10 is provided with the fourth connector 15; and the third connectors communicate with the fourth connectors 15 through the pipelines. The pipelines can be the quick-plug pipelines, with both ends provided with the quick-plug connectors; the first connectors and the second connectors 14 are also quick-plug connectors; and the two quick-plug connectors at both ends of the pipelines are connected to the first connectors and the second connectors 14 respectively.

In the embodiments, the third connectors and the fourth connector 15 are matched to realize quick communication between the thermal management parts 82 and the thermal management modules 23, which facilitates mounting of the thermal management modules 23.

In some embodiments, the thermal management modules 23 communicate with a plurality of thermal management parts 82 through the liquid cooling pipelines; the liquid cooling pipelines include a main pipeline and the plurality of branch pipelines, the plurality of branch pipelines are connected to the main pipeline in parallel, the main pipeline communicate with the thermal management modules 23, and the plurality of branch pipelines respectively communicate with the plurality of thermal management parts 82; the main pipeline is located above the plurality of battery apparatuses 80, or, the main pipeline is located below the plurality of battery apparatuses 80.

In the embodiments that the main pipeline is located above the plurality of battery apparatuses 80, the liquid cooling media flow to the plurality of branch pipelines from top to bottom through the main pipeline so as to cool the battery apparatuses 80.

In the embodiments that the main pipeline is located below the plurality of battery apparatuses 80, the liquid cooling media flow to the plurality of branch pipelines from bottom to top through the main pipeline so as to cool the battery apparatuses 80.

The main pipeline is arranged above the plurality of battery apparatuses 80, or, below the plurality of battery apparatuses 80, which is conducive to shortening the liquid cooling pipelines, thereby reducing the cost, and improving the cooling efficiency.

In some embodiments, the energy units 12 are battery cells, and the weight of each energy unit 12 is 5-60 kg.

The weight of the single energy unit 12 can be a point value of any one or a point value between any two of 5 kg, 10 kg, 15 kg, 20 kg, 25 kg, 30 kg, 35 kg, 40 kg, 45 kg, 50 kg, 55 kg, and 60 kg. As an example, the mass of the single energy unit 12 is 30 kg.

The energy units 12 have proper weight, so that a proper amount of energy units 12 can be accommodated into the first bin bodies 13, and the energy density is moderate under the condition of meeting the transportation requirements.

In some embodiments, the weight of the energy bins 10 is M, the weight of the energy units 12 in the energy bins 10 is M1, (M1/M) × 100% ≥ 60%.

By way of example, (M1/M) × 100% can be 60%, 61%, 62%, 63%, 64%, 65%, 66%, 67%, 68%, 69%, 70%, 71%, 72%, 73%, 74%, 75%, 76%, 77%, 78%, 79%, 80%, 90%.

Therefore, on one hand, the weight ratio of the energy units 12 in the first bin bodies 13 per unit volume can be increased, thereby increasing the electric quantity of the energy storage apparatus 100 per unit volume; on the other hand, during the transportation of the energy storage apparatus 100, more energy units 12 which contribute to energy storage and are high in production difficulty and cannot be produced at a destination are transported, while other structures can be produced at a place closer to the destination without transportation or reduced transportation.

In some embodiments, (M1/M) × 100% ≥ 80%.

By way of example, (M1/M) × 100% can be 80%, 81%, 82%, 83%, 84%, 85%, 86%, 87%, 88%, 89%, or 90%.

Therefore, the transportation cost of the assembled energy storage apparatus 100 can be further reduced.

In some embodiments, the weight of the energy bins 10 is M, the plurality of battery apparatuses 80 are arranged in the energy bins 10, each battery apparatus 80 includes the box 81 and the plurality of energy units 12, the plurality of energy units 12 are accommodated in the box 81, the total weight of the battery apparatuses 80 is M2, 70% ≤ (M2/M) × 100% ≤ 90%.

(M2/M) × 100% can be a point value of any one or a point value between any two of 70%, 71%, 72%, 73%, 74%, 75%, 76%, 77%, 78%, 79%, 80%, 81%, 82%, 83%, 84%, 85%, 86%, 87%, 88%, 89%, and 90%.

When (M2/M) × 100% ≥ 70%, the weight ratio of the energy units 12 in the first bin bodies 13 per unit volume can be improved, and the energy density of the first bin bodies 13 is improved; and when (M2/M) × 100% ≤ 90%, the structural strength of the first bin bodies 13 can be maintained. Therefore, when 70% ≤ (M2/M) × 100% ≤ 90%, the energy density of the energy bins 10 and the structural strength of the first bin bodies 13 can be balanced, so that the practicability of the first bin bodies 13 is improved.

In some embodiments, the plurality of battery apparatuses 80 can be arranged in rows and ranks, the plurality of battery apparatuses 80 in each row are arranged along the length direction, the plurality of battery apparatuses 80 in each rank are arranged along the height direction, and each battery apparatus 80 includes the thermal management part 82 and the plurality of energy units 12.

By way of example, the plurality of battery apparatuses 80 are arranged in 2 layers by 2 ranks, 3 layers by 3 ranks, 4 layers by 4 ranks, and 4 layers by 3 ranks.

It is to be noted that the plurality of battery apparatuses 80 can also be arranged in a plurality of rows, such as 2 rows, 3 rows, 4 rows, 5 rows or 6s rows; and the plurality of battery apparatuses 80 can also be arranged in a plurality of ranks, such as 2 ranks, 3 ranks, 4 ranks, 5 ranks or 6 ranks.

In some embodiments, the volume of the energy bins 10 is V, the total volume of the energy units 12 in the energy bins 10 is V1, (V1/V) × 100% ≥ 30%.

The energy units 12 include shells, and the volume of the energy units 12 is the volume of the shells. For example, the energy units 12 are square-shell energy units 12, and the product of the length, width and height of the square-shell energy units 12 is the product of the length, width and height of the shells.

In the embodiments that the energy units 12 further include electrode terminals, the electrode terminals are arranged on the shells and partially protrude out of the shells, the electrode terminals are electrically connected to an electrode assembly, and the parts of the electrode terminals protruding out of the shells are not calculated as the volume of the energy units 12.

(V1/V) × 100% can be 30%, 31%, 32%, 33%, 34%, 35%, 36%, 37%, 38%, 39%, 40%, 41%, 42%, 43%, 44%, 45%, 46%, 47%, 48%, 49%, 50%, 55%, 60%, 65%, or 70%.

On one hand, the weight ratio of the energy units 12 in the first bin bodies 13 per unit volume can be increased, thereby increasing the electric quantity of the energy storage apparatus 100 per unit volume; on the other hand, during the transportation of the energy storage apparatus 100, more energy units 12 which contribute to energy storage and are high in production difficulty and cannot be produced at a destination are transported, while other functional elements such as control elements of the energy storage apparatus 100 can be produced at a place closer to the destination without transportation or reduced transportation; and after the first bin bodies 13 are assembled into the energy storage apparatus 100, the transportation cost of the assembled energy storage apparatus 100 is reduced.

In some embodiments, (V1/V) × 100% ≥ 50%.

(V1/V) × 100%can be 50%, 51%, 52%, 53%, 54%, 55%, 56%, 57%, 58%, 59%, 60%, 61%, 62%, 63%, 64%, 65%, 66%, 67%, 68%, 69%, 70%, 75%, 80%, 85%, or 90%.

The transportation cost of the assembled energy storage apparatus 100 can be further reduced.

In some embodiments, the volume of the energy bins 10 is V, the plurality of battery apparatuses 80 are arranged in the energy bins 10, each battery apparatus 80 includes the box 81 and the plurality of energy units 12, the plurality of energy units 12 are accommodated in the box 81, the total volume of the battery apparatuses 80 is V2, 50% ≤ (V2/V) × 100% ≤ 80%.

The volume of the energy units 12 is the volume of the box 81. For example, the box 81 is of a cuboid structure, and the volume of the energy units 12 is equal to the product of the length, width and height of the box 81.

(V2/V) × 100% can be a point value of any one or a point value between any two of 50%, 51%, 52%, 53%, 54%, 55%, 56%, 57%, 58%, 59%, 60%, 61%, 62%, 63%, 64%, 65%, 66%, 67%, 68%, 69%, 70%, 75%, and 80%.

When (V2/V) × 100% ≥ 50%, the volume ratio of the energy units 12 in the first bin bodies 13 per unit volume can be improved, and the energy density of the energy storage apparatus 100 is improved; and when (V2/V) × 100% ≤ 80%, the first bin bodies 13 can have structural members with enough volume to maintain the structural strength. Therefore, when 50%≤(V2/V)×100%≤80%, the energy density of the energy storage apparatus 100 and the structural strength of the first bin bodies 13 can be balanced, and the practicability of the first bin bodies 13 is improved.

In some embodiments, with reference to FIG. 6, the energy of the energy bins 10 is E, the sizes of the energy bins 10 in the length direction is a, the size of the energy bins 10 in the width direction 10 is b, 250KW/*m* ² ≤ E/(a × b) ≤ 700KW/*m* ².

E/(a × b) can be a point value of any one or a point value between any two of 250 KW/m², 300 KW/m², 350 KW/m², 400 KW/m², 450 KW/m², 460 KW/m², 470 KW/m², 480 KW/m², 485 KW/m², 490 KW/m², 495 KW/m², 500 KW/m², 510 KW/m², 550 KW/m², 600 KW/m², 650 KW/m², 700 KW/m².

The energy E can be obtained from a nameplate of the energy bins 10.

When E/(a × b) ≥ 250KW/m ² , the energy bins 10 can have large energy density, and thus the practicability of the energy bins 10 is improved; when E/(a×b)≤700KW/m², the risk that the energy bins 10 are large in mass and consequently other energy bins 10 are crushed can be reduced, and transportation of the energy bins 10 is facilitated. Therefore, when 250KW/*m* ² ≤ E/(a × b) ≤ 700KW/m ², the energy density of the energy bins 10 and the mass setting of the energy bins 10 are balanced, thereby improving the practicability of the energy bins 10 as well as facilitating the transportation of the energy bins 10.

In some embodiments, 450KW/m ² ≤ E/(a × b) ≤ 600KW/m ².

E/(a × b)can be a point value of any one or a point value between any two of 450 KW/m², 455 KW/m², 460 KW/m², 465 KW/m², 470 KW/m², 475 KW/m², 480 KW/m², 485 KW/m², 490 KW/m², 495 KW/m², 500 KW/m², 505 KW/m², 510 KW/m², 515 KW/m², 520 KW/m², 530 KW/m², 540 KW/m², 550 KW/m², 600 KW/m².

An as example, E/(a × b) = 490KW/*m* ². The energy density of the energy bins 10 and the mass settings of the energy bins 10 can be further improved, thus facilitating the transportation of the energy bins 10.

In some embodiments, a plurality of energy bins 10 are provided; every two adjacent energy bins 10 are welded, clamped, locked or connected by a fixing member along the height direction.

The fixing member can be at least one of a bolt, a nut, a pin or a rivet. Definitely, the fixing member can also include a fixing plate and the like for fixedly connecting every two adjacent first bin bodies 13 in the height direction.

By way of example, every two adjacent energy bins 10 in the height direction are connected through a middle twist lock.

Every two adjacent energy bins 10 in the height direction are connected through the fixing members and can be limited by the fixing members, which is conducive to reducing the risk that every two adjacent energy bins 10 move mutually after being stacked, thereby improving the structural stability of the energy storage apparatus 100.

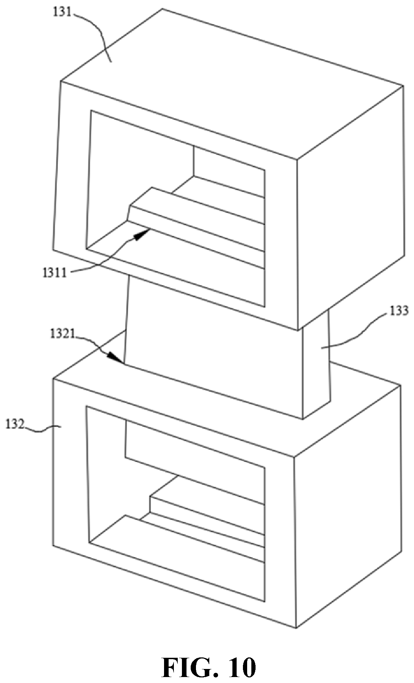

In some embodiments, with reference to FIG. 10, limiting pins 133 are arranged at the bottoms of the first bin bodies 13, limiting holes 1321 are formed in the tops of the lower first bin bodies 13, and the limiting pins 133 are clamped into the limiting holes 1321.

By way of example, the limiting pin 133 can be arranged at the bottom of one first bin body 13, while the limiting hole 1321 is formed in the top.

Therefore, by the limiting pins 133 and the limiting holes 1321 in matching, every two adjacent first bin bodies 13 in the height direction prevented from moving mutually by a simple structure.

The limiting holes 1321 in the tops of the first bin bodies 13 can be openings used for hoisting the first bin bodies 13, therefore, in the hoisting stage of the first bin bodies 13, the first bin bodies 13 are hoisted through the openings; and after the first bin bodies 13 are hoisted, the openings in the tops of the first bin bodies 13 are matched with the limiting pins 133 at the bottoms of the adjacent upper bins first 13, thereby limiting the two adjacent first bin bodies 13, and the structure of the first bin bodies 13 can be simplified.

In some embodiments, with reference to FIG. 10, first limiting members 131 are arranged at the bottoms of some of the first bin bodies 13 and are provided with limiting slots 1311, second limiting members 132 are arranged on the tops of some of the first bin bodies 13 and are provided with the limiting holes 1321; and both ends of the limiting pins 133 are correspondingly clamped into the limiting slots 1311 and the limiting holes 1321.

The second limiting members 132 can be the above hoisting parts, and the limiting holes 1321 can be the above openings. The limiting holes 1321 can also be holes formed in the first bin bodies 13.

In the embodiments, during stacking the first bin bodies 13 in the height direction, the limiting pins 133 are matched with the limiting slots 1311 in the upper first bin body 13 of every two adjacent first bin bodies 13 and matched with the limiting holes 1321 in the lower first bin body 13 of every two adjacent first bin bodies 13, and therefore the purpose of limiting relative movement of the two adjacent first bin bodies 13 is achieved through the simple structure.

Therefore, the manufacturing process is simplified, and the cost is reduced.

In some embodiments, a plurality of control bins 20 are provided; every two adjacent control bins 20 are welded, clamped, locked or connected by a fixing member along the height direction.

The fixing member can be at least one of a bolt, a nut, a pin or a rivet. Definitely, the fixing member can also include a fixing plate and the like for fixedly connecting every two adjacent first bin bodies 13 in the height direction.

By way of example, every two adjacent control bins 20 in the height direction are connected through a middle twist lock.

Every two adjacent control bins 20 in the height direction can be are connected through the fixing members and can be limited by the fixing members, which is conducive to reducing the risk that every two adjacent control bins 20 move mutually after being stacked, thereby improving the structural stability of the energy storage apparatus 100.

In some embodiments, with reference to FIG. 3 to FIG. 6, a first bin door 135 is arranged on at least one side of the energy bins 10 in the width direction.

That is, the first bin door 135 is arranged on at least one side of the energy bins 10 in the width direction, or, the first bin doors 135 are arranged on both sides of the energy bins 10 in the width direction.

By way of example, the first bin doors 135 are arranged on the front sides of the energy bins 10.

In the embodiments, the first bin door 135 is arranged on at least one side of the energy bins 10 in the width direction, maintenance can be carried out through the first bin door 135, thereby reducing land waste caused by reserving a maintenance channel more than 3 m between every two bin bodies of traditional bin bodies; and only a normal maintenance channel for paint repair is needed to be reserved between matts-shaped bin bodies, which improves the land investment returns of users and increases the energy yield per unit area for the users.

In some embodiments, a second bin door is arranged on at least one side of the control bins 20 in the width direction.

That is, the second bin door is arranged on at least one side of the control bins 20 in the width direction, or, the second bin doors are arranged on both sides of the control bins 20 in the width direction.

By way of example, the second bin doors are arranged on the front sides of the control bins 20.

In the embodiment, the second bin door is arranged on at least one side of the control bins 20 in the width direction, maintenance can be carried out through the second bin door, thereby reducing land waste caused by reserving a maintenance channel more than 3 m between every two bin bodies of traditional bin bodies; and only a normal maintenance channel for paint repair is needed to be reserved between matts-shaped bin bodies, which improves the land investment returns of users and increases the energy yield per unit area for the users.

By way of example, the energy bins 10 further internally includes water cooling pipelines, high-voltage wire harnesses, low-voltage wire harnesses, fire-fighting sensors and the like.

With reference to FIG. 3, the second connectors 14 include low-voltage connectors 141 and high-voltage connectors 142; the high-voltage wire harnesses are connected to the high-voltage connectors 142; and the low-voltage wire harnesses are connected to the low-voltage connectors 141.

The water cooling pipelines are connected to fourth connectors 15.

The foregoing are only preferred embodiments of the present disclosure and are not intended to limit the present disclosure, which is subject to various changes and variations for those skilled in the art. Any modifications, equivalent replacements, improvements, etc., made within the spirit and principles of this disclosure are included in the scope of protection of this disclosure.

## Claims

1. An energy storage apparatus, comprising:
at least one energy bin which comprises a first bin body and an energy unit that is accommodated in the first bin body, a size of the energy bin in a height direction being less than a size of one standard container in the height direction; and
at least one control bin which is arranged outside the energy bin and comprises a second bin body and a control module, the control module being accommodated in the second bin body and configured to perform electrical control on the energy unit in the energy bin.

2. The energy storage apparatus according to claim 1, wherein the control bins and the energy bins are arranged separately.

3. The energy storage apparatus according to claim 1 or 2, wherein the control bins are arranged at ends of the energy bins in the length direction; and/or,
the control bins are arranged on one side of the energy bins in a width direction; and/or,
the control bins and the energy bins are arranged in the height direction of the energy storage apparatus.

4. The energy storage apparatus according to any one of claims 1 to 3, wherein a plurality of energy bins are provided and are arranged in the height direction of the energy storage apparatus.

5. The energy storage apparatus according to any one of claims 1 to 4, wherein a plurality of control bins are provided and are arranged in the height direction of the energy storage apparatus.

6. The energy storage apparatus according to any one of claims 1 to 5, wherein at least some of the control bins comprise first connectors which are electrically connected to the control modules; each energy bin comprises a second connector; the second connectors are electrically connected to the plurality of energy units; and the first connectors are matched with the second connectors.

7. The energy storage apparatus according to any one of claims 1 to 6, wherein the control bins correspond to the energy bins one to one; or, one control bin performs electrical control on the energy units in the plurality of energy bins.

8. The energy storage apparatus according to any one of claims 1 to 6, wherein the control modules comprise general control modules, and the general control modules are electrically connected to the energy units in at least one first bin body.

9. The energy storage apparatus according to claim 8, wherein the control modules comprise main control modules which are electrically connected to the general control modules; and
one main control module is configured to control the input or output of electric energy of the energy units in one energy cabin, or, one main control module is configured to control the input or output of the electric energy of the energy units in the plurality of energy cabins.

10. The energy storage apparatus according to any one of claims 1 to 9, wherein the number of the energy cabins is greater than or equal to the number of the control cabins.

11. The energy storage apparatus according to any one of claims 1 to 10, wherein the control bins comprise thermal management modules, and the thermal management modules are configured to manage temperatures of the energy units in all energy bins and are accommodated in the control bins.

12. The energy storage apparatus according to claim 11, wherein one thermal management module is configured to manage the temperature of the energy units in one energy bin, or, one thermal management module is configured to manage the temperatures of the energy units in the plurality of energy bins.

13. The energy storage apparatus according to claim 11 or 12, wherein at least some of the thermal management modules and at least some of the control modules are accommodated in the same control bin.

14. The energy storage apparatus according to claim 11 or 12, wherein the thermal management modules and the control modules are accommodated in different control bins.

15. The energy storage apparatus according to any one of claims 11 to 14, comprising a plurality of battery apparatuses, wherein each battery apparatus comprises a thermal management part and the plurality of energy units; the thermal management parts are configured to regulate the temperatures of the energy units;
at least some of the control bins comprise third connectors, each energy bin comprises a fourth connector, the third connectors communicate with the thermal management modules, the fourth connectors communicate with the thermal management parts, and the third connectors are matched with the corresponding fourth connectors.

16. The energy storage apparatus according to any one of claims 1 to 15, wherein the height of each energy bin is h, 850mm ≤ h < 2896mm.

17. The energy storage apparatus according to claim 16, wherein 1300mm ≤ h ≤ 2400mm.

18. The energy storage apparatus according to any one of claims 1 to 17, wherein the size of each bin body in the length direction is consistent with the size of the standard container in the length direction, and the size of each bin body in the width direction is consistent with the size of the standard container in the width direction.

19. The energy storage apparatus according to any one of claims 1 to 18, wherein the energy units are battery cells, and the weight of a single energy unit is 5-60 kg.

20. The energy storage apparatus according to any one of claims 1 to 19, wherein the weight of the energy bins is M, and M is less than or equal to 45 tons.

21. The energy storage apparatus according to any one of claims 1 to 20, wherein the weight of the energy bins is M, the total weight of energy units in the energy bins is M1, (M1/M) × 100% ≥ 60%.

22. The energy storage apparatus according to claim 21, wherein (M1/M) × 100% ≥ 80%.

23. The energy storage apparatus according to any one of claims 1 to 22, wherein the weight of the energy bins is M; a plurality of battery apparatuses are arranged in the energy bins, each comprises a box and the plurality of energy units; the plurality of energy units are accommodated in the box; and the total weight of the battery apparatuses is M2, 70% ≤ (M2/M) × 100% ≤ 90%.

24. The energy storage apparatus according to any one of claims 1 to 23, wherein volumes of the energy bins are V, the total volume of the energy units in the energy bins is V1, (V1/V) × 100% ≥ 30%.

25. The energy storage apparatus according to claim 24, wherein (V1/V) × 100% ≥ 50%.

26. The energy storage apparatus according to any one of claims 1 to 25, wherein the volumes of the energy bins are V; the plurality of battery apparatuses are arranged in the energy bins, each comprising the box and the plurality of energy units; the plurality of energy units are accommodated in the box; and the total volume of the battery apparatuses is V2, 50% ≤ (V2/V) × 100% ≤ 80%.

27. The energy storage apparatus according to any one of claims 1 to 26, wherein the energy of the energy bins is E, the sizes of the energy bins in the length direction are a, the sizes of the energy bins in the width direction are b, 250KW/*m*² ≤ E/(a × b) ≤ 700KW/*m* ².

28. The energy storage apparatus according to claim 27, wherein 450KW/*m* ² ≤ E/(a × b) ≤ 600KW/*m* ².

29. The energy storage apparatus according to any one of claims 1 to 28, wherein the plurality of energy bins are provided, and every two adjacent energy bins are welded, clamped, locked or connected through a fixing member in the height direction.

30. The energy storage apparatus according to any one of claims 1 to 29, wherein the plurality of control bins are provided, and every two adjacent control bins are welded, clamped, locked or connected through a fixing member in the height direction.

31. The energy storage apparatus according to any one of claims 1 to 30, wherein the standard containers in the height direction are 20-chi standard containers, with the heights of 2,896 mm, 2,591 mm or 2,438 mm.

32. The energy storage apparatus according to any one of claims 1 to 31, wherein a first bin door is arranged on at least one side of the energy bins in the width direction; and/or
a second bin door is arranged on at least one side of the control bins in the width direction.

33. An energy storage system, comprising a power conversion apparatus and the energy storage apparatus according to any one of claims 1 to 32, wherein the power conversion apparatus is configured to electrically connect a power generation apparatus with the energy storage apparatus.

34. A charging network, comprising a charging pile and the energy storage apparatus according to any one of claims 1 to 32 or the energy storage system according to claim 33, wherein the energy storage apparatus is configured to provide electric energy for the charging pile.
